# EUROPEAN PATENT SPECIFICATION

(11) **EP 2 829 755 B1**
(45) Date of publication and mention of the grant of the patent: **31.10.2018**
(21) Application number: 13765188.1
(22) Date of filing: 21.03.2013
(51) Int. Cl.: F16C 33/76, B60B 35/02, F16C 19/18, F16C 41/00

(54) **WHEEL BEARING APPARATUS**
RADLAGERVORRICHTUNG
ROULEMENT DE ROUE

(30) Priority: 21.03.2012 JP 2012064296; 26.03.2012 JP 2012068664; 26.03.2012 JP 2012069275; 28.03.2012 JP 2012072794; 28.06.2012 JP 2012145800
(43) Date of publication of application: 28.01.2015
(73) Proprietor: NTN Corporation, Osaka-shi, Osaka 550-0003 (JP)
(72) Inventor: SUZUKI, Syougo, Shizuoka 4388510 (JP); FUKUSHIMA, Shigeaki, Shizuoka 4388510 (JP); TAKAKI, Masuo, Shizuoka 4388510 (JP); TAKADA, Sadako, Shizuoka 4388510 (JP); OHTSUKI, Hisashi, Shizuoka 4388510 (JP)
(74) Representative: Cohausz & Florack
(86) International application number: PCT/JP2013/058141
(87) International publication number: WO 2013/141319

(56) References cited:
- JP-A- 2007 205 392
- JP-A- 2007 315 411
- JP-A- 2009 144 791
- JP-A- 2010 106 909
- JP-A- 2010 180 912
- JP-A- 2011 047 447
- JP-A- 2011 098 714
- JP-A- 2011 117 583
- JP-A- 2011 174 511
- JP-A- 2011 201 347

## Description

### Field of the Invention

The present invention generally relates to a wheel bearing apparatus for rotationally support a wheel of a vehicle such as an automobile with respect to a suspension apparatus, and more particularly to a wheel bearing apparatus to which a rotational speed sensor for detecting wheel speed of a vehicle is adapted to be mounted.

### Description of Background Art

It has been generally known a wheel bearing apparatus which can support a wheel of vehicle with respect to a suspension apparatus and detect a rotation speed of a wheel of vehicle to control the anti-lock braking system (ABS). Such a bearing apparatus generally comprises a sealing apparatus arranged between inner and outer members rotating relatively each other via rolling elements contained therebetween. The rotational speed detecting apparatus comprises a magnetic encoder having magnetic poles alternately arranged along its circumference integrally formed with the sealing apparatus and a rotational speed sensor for detecting change of magnetic poles of the magnetic encoder caused by the rotation of a wheel.

In general, the rotational speed sensor is mounted on a knuckle after the wheel bearing apparatus having been mounted on the knuckle forming part of a suspension apparatus. However, it has been recently proposed a wheel bearing apparatus to which a rotational speed sensor is adapted to be mounted in order to reduce a whole size of the wheel bearing apparatus and to eliminate the complexity of adjustment of an air gap between the rotational speed sensor and a magnetic encoder.

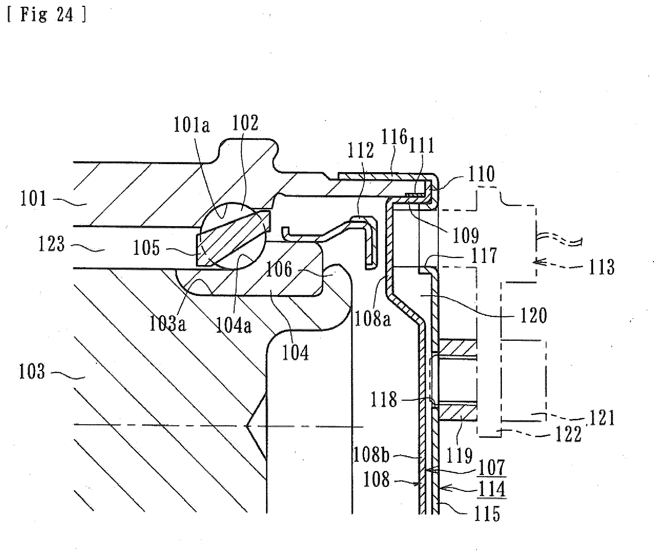

It is known a structure shown in Fig. 24 as one example of the wheel bearing apparatus. This wheel bearing apparatus comprises an outer member 101 forming a stator member secured on a knuckle (not shown) and formed with double row outer raceway surfaces 101a (only one of them is shown), a hub wheel 103 inserted into the outer member 101 via double row balls 102, and an inner ring 104 fitted onto the hub wheel 103.

One inner raceway surface (not shown) is formed on the outer circumference of the hub wheel 103 and the other inner raceway surface 104a is formed on the outer circumference of the inner ring 104. The inner ring 104 is press-fitted onto a cylindrical portion 103a axially extending from the inner raceway surface of the hub wheel 103. The double row balls 102 are contained between the outer and inner raceway surfaces and rollably held by cages 105.

The hub wheel 103 has on its one end a wheel mounting flange for mounting a wheel and the inner ring 104 is axially immovably secured by a caulked portion 106 formed by plastically deforming radially outward the end of the cylindrical portion 103a. The inboard-side end of the outer member 101 is provided with a first cap (i.e. cover) 107 to prevent leakage of lubricating grease contained in the wheel bearing and entering of rain water or dusts into the wheel bearing from outside.

The first cap 107 is formed of austenitic stainless steel sheet such as SUS 304, non-magnetic metal sheet such as aluminum alloy or non-metallic sheet such as plastic sheet and comprises a bottom portion 108, a flat portion 108a of the bottom portion 108 and a cylindrical portion 109 axially extending from the outer periphery of the bottom portion 108. In addition, a flange-like abutting portion 110 extends radially outward from the cylindrical portion 109 so as to be abutted against the inboard-side end face of the outer member 101.

The bottom portion 108 comprises the flat portion 108a and a bulged portion 108b arranged at the center of the bottom portion 108 and bulged toward an axially inboard-side from the flat portion 108a. In addition, a sealing member 111 of elastomer such as rubber is arranged on the outer circumference of the cylindrical portion 109.

The first cap 107 is secured on the outer member 101 with its cylindrical portion 109 being press-fitted via interference fit into the axially inboard-side end of the outer member 101. In addition, the outboard-side surface of the abutting portion 110 of the first cap 107 is abutted against the inboard-side end face of the outer member 101 and the outboard-side surface of the flat portion 108a is closely opposed to a magnetic encoder 112 press-fitted onto the inner ring 104.

A second cap (i.e. sensor holding plate) 114 for holding a sensor 113 is press-fitted via interference fit onto the axially inboard-side end of the outer member 101. The second cap 114 is formed of ferrous metal such as carbon steel or stainless steel, non-ferrous metal such as aluminum alloy or plastics and shaped as having a generally dish-like shape and comprises a flat disc-shaped bottom portion 115, a cylindrical fitting portion 116 bent axially outboard from the bottom portion 115. A through aperture 117 is formed at a radially outward position of the bottom portion 115 and a mounting aperture 118 is formed at a position near the center of the bottom portion 115 and a nut 119 is secured around the mounting aperture 118 by welding, adhesion, press-fitting or caulking.

The fitting portion 116 of the second cap 114 is press-fitted onto the axially inboard-side end of the outer member 101 so that the abutting portion 110 of the first cap 107 is sandwiched axially both sides thereof between the bottom portion 115 and the outer member 101. Thus, the second cap 114 can prevent the first cap 107 from being displaced toward the axially inboard-side direction and cover the first cap 107 from the axially inboard-side via a space 120.

In order to secure the sensor 113 to the bearing apparatus, the tip end of the sensor 113 is firstly inserted through the aperture 117 into the space 120 until the tip end of the sensor 113 is abutted against the axially inboard-side surface of the flat portion 108a of the bottom portion 108 and then a bolt 121 is fastened to the nut 119 through an aperture formed in a mounting flange 122 of the sensor 113.

As can be understood from the description above, the second cap 114 can prevent the first cap 107 closing an inside space 123 in which the magnetic encoder 112 is arranged from being pushed and displaced toward the magnetic encoder 112 by the abutting operation of the detecting portion (tip end) of the sensor 113 and can also exactly limit the axial displacement of the first cap 107. In addition, the second cap 114 can prevent generation of deformation of the first cap 107 by any force which would cause deterioration in detection accuracy.

Furthermore, although a radially inward force is applied to the bottom portion 108 of the first cap 107 when the cylindrical portion 109 of the first cap 107 is press-fitted into the end of the outer member 101, the applied energy is used for deforming the bulged portion 108b. As the result of which, it is possible to effectively suppress the deformation of the flat portion 108a and exactly limit the axial position of the flat portion 108a (see e.g. Patent Document 1 below).

### Document of Prior Art

### Patent Document

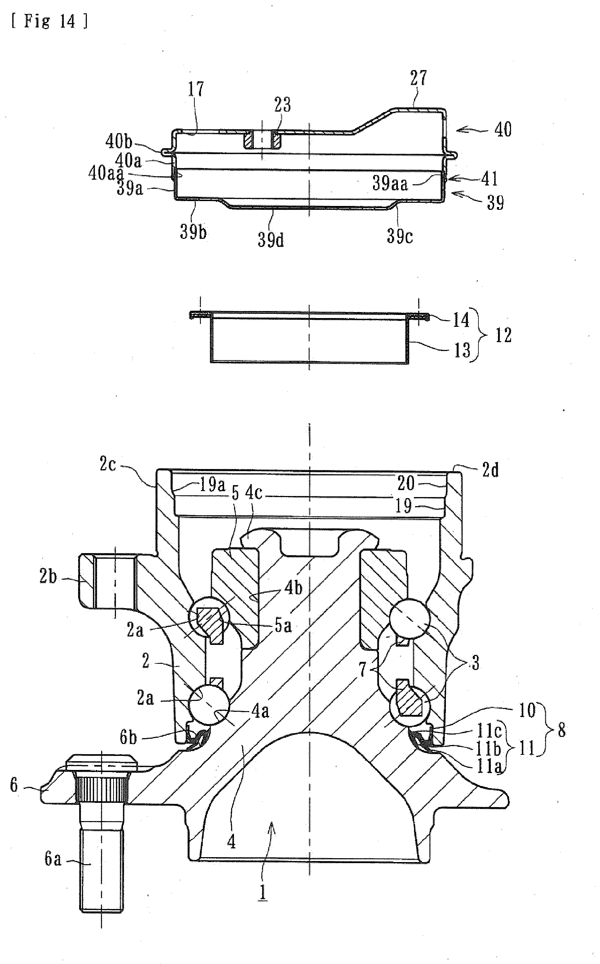

Patent Document 1: JP 2010-180912 A. Moreover, US 2012 177312A discloses a wheel bearing apparatus incorporated with a rotational speed detecting apparatus according to the preamble of claim 1 with a drain 36 that is formed in the sensor cap 35 (Fig. 14).

### Disclosure of the Invention

### Problems to be solved by the Invention

In such a wheel bearing apparatus of the prior art as disclosed in JP 2010-180912 A, although the first cap 107 is press-fitted into the inner circumference of the end of the outer member 101, the second cap 114 is press-fitted onto the outer circumference of the end of the outer member 101. Accordingly, the cylindrical fitting portion 116 of the second cap 114 would be expanded to a horn-like shape and slipped out from the outer member 101 when the outer member 101 is deformed due to vibrations or a large load applied thereto. In addition, the rigidity of the second cap 114 of the outer circumference-fitting type of the prior art is smaller than that of the sensor holding plate of the inner circumference-fitting type and thus it is afraid that insufficient strength and rigidity of the sensor holding plate of the outer circumference-fitting type could not maintain stable detection accuracy for a sensor 113.

It is, therefore, an object of the present invention to provide a wheel bearing apparatus which can solve problems of prior art and thus achieve improved detection accuracy and sealability by increasing the rigidity of the second cap.

### Means for solving problems

For achieving the object mentioned above, there is provided, according to the present invention of claim 1, a wheel bearing apparatus comprising an outer member integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the inner raceway surfaces and outer raceway surfaces of the inner member and outer member; a pulser ring adapted to be fitted onto the outer circumference of the inner ring and having characteristics alternately and equidistantly varying along its circumferential direction; a cup-shaped second cap press-formed of steel sheet and fitted on the inboard-side end of the outer member; a rotational speed sensor mounted on the second cap at a radially outer position thereof, the rotational speed sensor being arranged oppositely to the pulser ring via a predetermined axial air gap; a cup-shaped first cap being press-fitted into the inner circumference of an inboard-side end of the outer member via a predetermined interference, being press-formed of non-magnetic austenitic stainless steel sheet and comprising a cylindrical fitting portion press-fitted into the inner circumference of the inboard-side end of the outer member, a disc portion extending radially inward from the fitting portion and opposing to the pulser ring via a small axial gap; the rotational speed sensor being arranged oppositely to the pulser ring via the first cap with being abutted against or closed to the disc portion of the first cap; and the second cap being press-fitted into the inner circumference of an inboard-side end of the outer member via a predetermined interference, characterized in that a bulged portion is formed on a bottom portion of the second cap at a region nearer to the ground and that a drain which is radially cut-through is formed in a bottom wall of the bulged portion. This makes it possible to effectively discharge foreign matters outside without being disturbed by a knuckle of a vehicle even when the knuckle projects to the inboard-side from the end of the outer member.

According to the present invention of claim 1, since the wheel bearing apparatus comprises a pulser ring adapted to be fitted onto the outer circumference of the inner ring and having characteristics alternately and equidistantly varying along its circumferential direction; a cup-shaped second cap press-formed of steel sheet and fitted on the inboard-side end of the outer member; and a rotational speed sensor mounted on the second cap at a radially outer position thereof, the rotational speed sensor being arranged oppositely to the pulser ring via a predetermined axial air gap and a cup-shaped first cap being press-fitted into the inner circumference of an inboard-side end of the outer member via a predetermined interference, being press-formed of non-magnetic austenitic stainless steel sheet and comprising a cylindrical fitting portion press-fitted into the inner circumference of the inboard-side end of the outer member, a disc portion extending radially inward from the fitting portion and opposing to the pulser ring via a small axial gap; the rotational speed sensor being arranged oppositely to the pulser ring via the first cap with being abutted against or closed to the disc portion of the first cap; and the second cap being press-fitted into the inner circumference of an inboard-side end of the outer member via a predetermined interference, it is possible to provide a wheel bearing apparatus with reliability which can achieve improved detection accuracy and sealability by increasing the rigidity of the second cap.

As defined in claim 2, it is preferable that a first fitting surface is formed on the inner circumference of the inboard-side end of the outer member and a second fitting surface is formed on the inner circumference of the outer member at a further inboard-side from the first fitting surface via a stepped portion, and that the first cap is press-fitted onto the first fitting surface and the second cap is press-fitted onto the second fitting surface. This makes it possible to suppress the press-fitting stroke minimum and improve the assembling workability as well as to prevent deformation of the first cap during the press-fitting process and thus improve the reliability of the wheel bearing apparatus.

It is also preferable as defined in claim 3 that the first fitting surface and the second fitting surface are ground by a formed grinding wheel simultaneously with the double row outer raceway surfaces. This makes it possible to improve the accuracy in the roundness and coaxiality of each fitting surface and thus to improve the sealability of the fitting portions. In addition, the simultaneous grinding can reduce working steps and therefore manufacturing costs.

It is preferable as defined in claim 4 that the second cap comprises a cylindrical fitting portion fitted on the inner circumference of the inboard-side end of the outer member, a flange portion formed as a double bent portion extending radially outward from the fitting portion adapted to be closely contacted against the inboard-side end face of the outer member, and the bottom portion extending radially inward from the flange portion to close an inboard-side opening of the outer member, and that an insert aperture is formed in the bottom portion at a position corresponding to the pulser ring into which the rotational speed sensor is inserted and mounted therein. This makes it possible to increase the rigidity of the second cap and thus to improve the positioning accuracy in the rotational speed sensor. In addition, it is possible to suppress air gap variation between the rotational speed sensor and the pulser ring and thus to obtain stable detection accuracy even if the outer member and the inner member would be relatively inclined by a lateral load applied to them from a wheel.

It is preferable as defined in claim 5 that a depth of the second fitting surface is larger than the thickness of the second cap. This makes it possible to make the fitting portion of the second cap to be projected from the inner circumference of the end of the outer member and thus to prevent foreign matters entered within the second cap from being accumulated in this place.

As defined in claim 6, it is also preferable that the inner circumference between the first fitting surface and the second fitting surface of the outer member is formed as a tapered surface with its radius gradually increasing at an angle toward the opening of the outer member. This makes it possible to smoothly displace foreign matters entered within the second cap without residence.

It is also preferable as defined in claim 7 that the second cap is coated by rust-preventing coating film comprising cation electro-deposition. This makes it possible to keep a smooth surface of the fitting surface with embedding micro irregularities with preventing easy peeling of the rust-preventing coating film during the press-fitting of the outer member. Accordingly, it is possible to prevent generation of rust in the fitting portion of the second cap for a long term and thus to obtain good sealability in the fitting portion between the second cap and the outer member.

It is preferable as defined in claim 8 that the second cap is formed of rust-prevented steel sheet and an elastic member is integrally adhered on the second cap at a portion contacted with the outer member. This makes it possible to improve the sealability and thus reliability of the second cap.

It is also preferable as defined in claim 9 that the elastic member of the second cap is formed of rust-preventing coating film comprising cation electro-deposition. This makes it possible to prevent generation of rust of the abutting portion for a long term and to keep a good sealability.

It is preferable as defined in claim 10 that the elastic member of the second cap is a packing member formed of synthetic rubber integrally adhered to the second cap by vulcanized adhesion.

It is defined in claim 1, that a bulged portion is formed on the bottom portion of the second cap at a region nearer to the ground and that a drain which is radially cut-through is formed in a bottom wall of the bulged portion. This makes it possible to effectively discharge foreign matters outside without being disturbed by a knuckle of a vehicle even when the knuckle projects to the inboard-side from the end of the outer member..

It is preferable as defined in claim 11 that the drain is formed as a tongue by punching and bending the bottom wall of the bulged portion. According to this structure, the tongue can close an opening of the drain and perform a protecting wall for preventing entering of muddy water or pebbles and thus can maintain the speed detecting accuracy and improve the reliability of an ABS.

It is preferable as defined in claim 12 that a radially reduced portion is formed between the fitting portion and the disc portion of the first cap and an elastic member of synthetic rubber is integrally adhered to the radially reduced portion by vulcanized adhesion, and that the elastic member is arranged so that it does not project from the side surface of the disc portion toward the inboard-side to prevent the elastic member from interfering with the rotational speed sensor and the elastic member is formed with an annular projection projecting radially outward from the fitting portion. According to this structure, the annular projection of the elastic member is elastically deformed and pressed onto the inner circumference of the outer member during press-fitting of the first cap and thus the sealability of the fitting portion can be improved.

It is also preferable as defined in claim 13 that the second cap is formed of steel sheet and press-fitted via a predetermined interference into the inner circumference of the inboard-side end of the outer member in an overlapped state with the first cap. This makes it possible to provide a wheel bearing apparatus which is improved in the detecting accuracy and sealability and can reduce the manufacturing cost with reducing its assembling steps by press-fitting both the first and second caps by single press-fitting operation.

It is preferable as defined in claim 14 that a stepped portion is formed on an opening end of the fitting portion of the second cap and the stepped portion and the fitting portion of the first cap have predetermined width dimensions, and that an opening end of the fitting portion of the first cap is press-fitted into the second cap until the opening end of the fitting portion of the first cap is abutted against a wall of the stepped portion. This makes it possible to accurately set the air gap between the rotational speed sensor mounted in the aperture of the second cap and the pulser ring and prevent deformation of the first cap if the thickness of sheet forming the first cap is set small.

It is also preferable as defined in claim 15 that the fitting portion of the first cap and the fitting portion of the second cap have predetermined width dimensions, and that the fitting portion of the first cap is press-fitted into the fitting portion of second cap until the end face of the fitting portion of the first cap is abutted against the bottom portion of the second cap. Similarly to the invention of claim 14, this invention also makes it possible to accurately set the air gap between the rotational speed sensor mounted in the aperture of the second cap and the pulser ring and prevent deformation of the first cap if the thickness of sheet forming the first cap is set small.

It is preferable as defined in claim 16 that the fitting portion of the first cap and the fitting portion of the second cap have predetermined width dimensions, and that the fitting portion of the second cap is press-fitted into the fitting portion of first cap until the end face of the fitting portion of the second cap is abutted against the disc portion of the first cap. Similarly to the inventions of claims 14 and 15, this invention also makes it possible to accurately set the air gap between the rotational speed sensor mounted in the aperture of the second cap and the pulser ring and prevent deformation of the first cap if the thickness of sheet forming the first cap is set small.

It is also preferable as defined in claim 17 that the second cap has a flange portion formed as a double bent portion extending radially outward from the fitting portion adapted to be closely contacted against the inboard-side end face of the outer member, that the fitting portion of the first cap and the fitting portion of the second cap have predetermined width dimensions, and that the fitting portion of the first cap is press-fitted onto the fitting portion of second cap until the opening end of the fitting portion of the first cap is abutted against the side surface of the flange portion, and the second cap is press-fitted into the outer member until the side surface of the flange portion is abutted against the end face of the outer member. Similarly to the inventions of claims 14, 15 and 16, this invention also makes it possible to accurately set the air gap between the rotational speed sensor mounted in the aperture of the second cap and the pulser ring and prevent deformation of the first cap if the thickness of sheet forming the first cap is set small.

It is preferable as defined in claim 18 that the elastic members of synthetic rubber are integrally adhered by vulcanized adhesion to the connected portion between the fitting portion of the first cap and the fitting portion of the second cap, and that the elastic member is elastically deformed and press-contacted with the fitting surface of the outer member and the elastic member is elastically deformed and closely contacted to the fitting portion of the first cap. This makes it possible to improve the sealability of the first cap.

### Effects of the invention

According to the wheel bearing apparatus, since it comprises an outer member integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the inner raceway surfaces and outer raceway surfaces of the inner member and outer member; a pulser ring adapted to be fitted onto the outer circumference of the inner ring and having characteristics alternately and equidistantly varying along its circumferential direction; a cup-shaped second cap press-formed of steel sheet and fitted on the inboard-side end of the outer member; a rotational speed sensor mounted on the second cap at a radially outer position thereof, the rotational speed sensor being arranged oppositely to the pulser ring via a predetermined axial air gap; a cup-shaped first cap being press-fitted into the inner circumference of an inboard-side end of the outer member via a predetermined interference, being press-formed of non-magnetic austenitic stainless steel sheet and comprising a cylindrical fitting portion press-fitted into the inner circumference of the inboard-side end of the outer member, a disc portion extending radially inward from the fitting portion and opposing to the pulser ring via a small axial gap; said rotational speed sensor being arranged oppositely to the pulser ring via the first cap with being abutted against or closed to the disc portion of the first cap; and said second cap being press-fitted into the inner circumference of an inboard-side end of the outer member via a predetermined interference, it is possible to provide a wheel bearing apparatus with reliability which can achieve improved detection accuracy and sealability by increasing the rigidity of the second cap.

### Brief Description of the Drawings

[Fig.1] A longitudinal-section view of a first embodiment of a wheel bearing apparatus of the present invention;
[Fig. 2] A partially enlarged view of a detecting portion of Fig. 1;
[Fig.3] A partially perspective view of a second cap of Fig. 1;
[Fig.4] Fig. 4(a) is a longitudinal-section view of the first cap, and Fig. 4(b) is a longitudinal-section view of the second cap;
[Fig.5] A partially enlarged view of a drain portion of Fig. 1;
[Fig.6] Fig. 6(a) is a partially enlarged view of a fitting portion of the second cap of Fig. 1, and Fig. 6(b) is a partially enlarged view of a modification of Fig. 6(a);
[Fig.7] A partially enlarged view of a modification of the second caps of Fig. 6;
[Fig.8] An explanatory view showing a grinding method of the outer member of the wheel bearing apparatus of the present invention;
[Fig.9] Fig. 9(a) is a partially enlarged view of a fitting portion of the second cap of Fig. 1, and Fig. 9(b) is a partially enlarged view of a modification of Fig. 9(a);
[Fig.10] A longitudinal-section view of a second embodiment of a wheel bearing apparatus of the present invention;
[Fig.11] A partially enlarged view of a detecting portion of Fig. 10;
[Fig. 12] A partially enlarged perspective view of a united condition of the first cap and the second cap of Fig. 10;
[Fig.13] A partially enlarged view of a drain portion of Fig. 10;
[Fig.14] An explanatory view showing an assembling method of the wheel bearing apparatus of the present invention;
[Fig. 15] Fig. 15(a) is an explanatory view of an assembling method of a pulser ring of Fig. 14, and Fig. 15(b) is an explanatory view of a modification of Fig. 15(a);
[Fig. 16] An explanatory view showing an assembling method of the first and second caps of Fig. 14;
[Fig. 17] Fig. 17(a) is an explanatory view showing an assembling method of the first and second caps of Fig. 12, and Fig. 17(b) is an explanatory view of a modification of Fig. 17(a);
[Fig.18] A longitudinal-section view of a third embodiment of a wheel bearing apparatus of the present invention;
[Fig. 19] A partially enlarged view of a drain portion of Fig. 18;
[Fig. 20] A longitudinal-section view of a fourth embodiment of a wheel bearing apparatus of the present invention;
[Fig. 21] A partially enlarged view of a drain portion of Fig. 20;
[Fig. 22] A longitudinal-section view of a fifth embodiment of a wheel bearing apparatus of the present invention;
[Fig. 23] A partially enlarged view of a drain portion of Fig. 22; and
[Fig. 24] A partially enlarged view of a wheel bearing apparatus of the prior art.

### One preferable mode for carrying out the Invention

One preferable mode for carrying out the present invention is a wheel bearing apparatus comprising an outer member integrally formed on its outer circumference with a body mounting flange to be mounted on a body of a vehicle and on its inner circumference with double row outer raceway surfaces; an inner member including a hub wheel and an inner ring, the hub wheel being integrally formed on its one end with a wheel mounting flange and having a cylindrical portion axially extending from the wheel mounting flange, the inner ring being press-fitted onto the cylindrical portion of the hub wheel, the inner member being formed on its outer circumference with double row inner raceway surfaces opposing to the double row outer raceway surfaces; double row rolling elements contained between the inner raceway surfaces and outer raceway surfaces of the inner member and outer member; a magnetic encoder press-fitted onto the inner ring; a cup-shaped second cap press-formed of steel sheet and fitted on the inboard-side end of the outer member; and a rotational speed sensor mounted on the second cap at a radially outer position thereof, the rotational speed sensor being arranged oppositely to the pulser ring via a predetermined axial air gap characterized in that a cup-shaped first cap is press-fitted into the inner circumference of an inboard-side end of the outer member via a predetermined interference, the first cap being press-formed of non-magnetic austenitic stainless steel sheet and comprising a cylindrical fitting portion press-fitted into the inner circumference of the inboard-side end of the outer member, a disc portion extending radially inward from the fitting portion and opposing to the pulser ring via a small axial gap, and a bottom portion extending radially inward from the disc portion via a bent portion and covering the inboard-side end of the inner member; that said rotational speed sensor is arranged oppositely to the magnetic encoder via the first cap with being abutted against or closed to the disc portion of the first cap; and that said second cap is press-fitted into a fitting surface formed via a stepped portion via a predetermined interference.

Preferred embodiments of the present invention will be described with reference to the accompanied drawings.

### First Embodiment

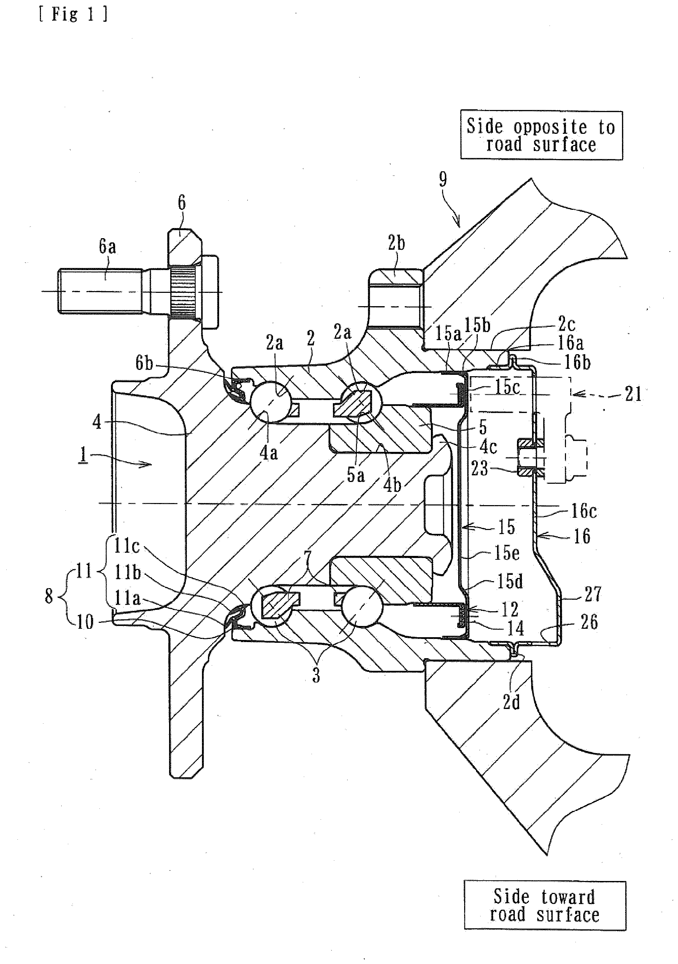

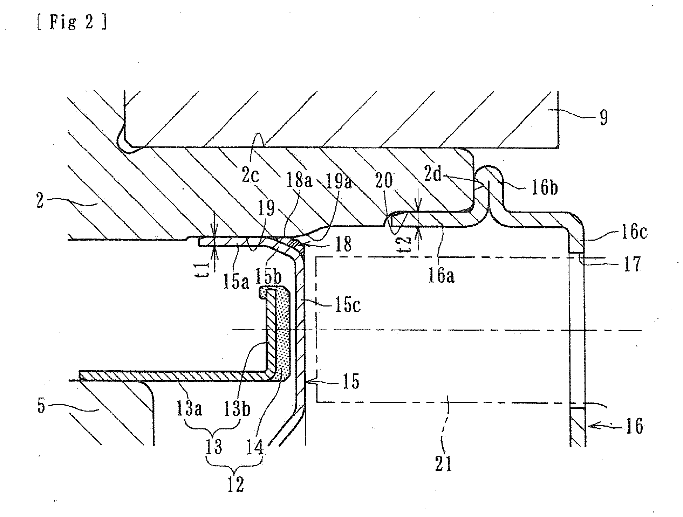

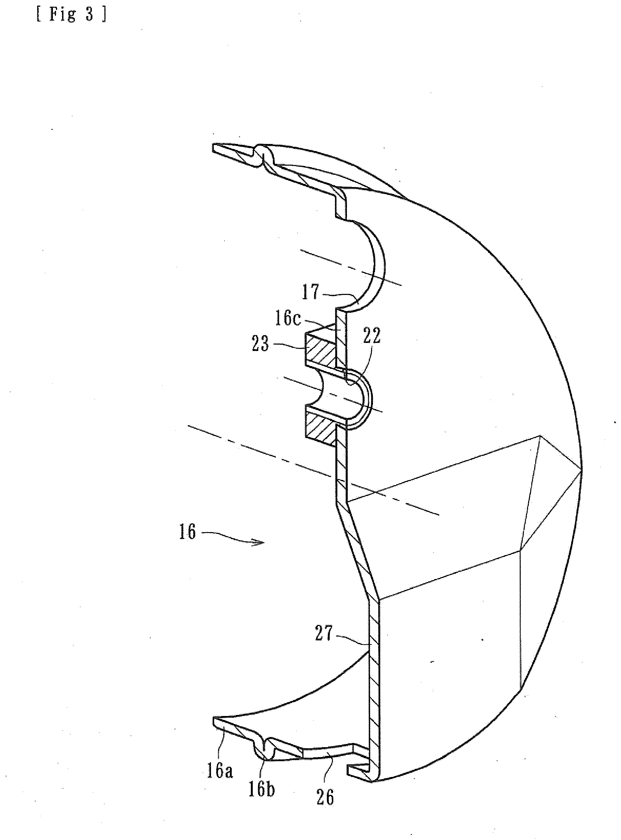

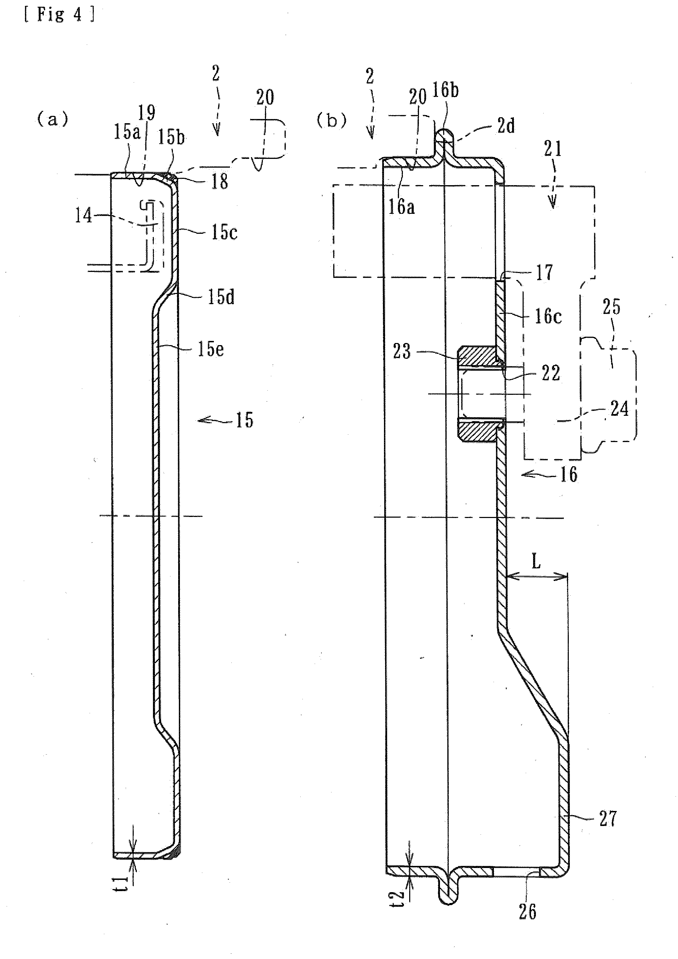

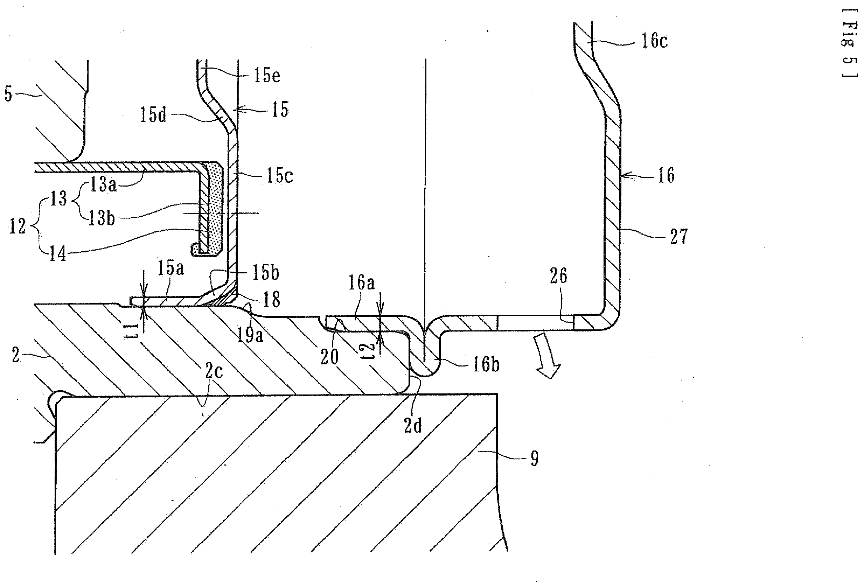

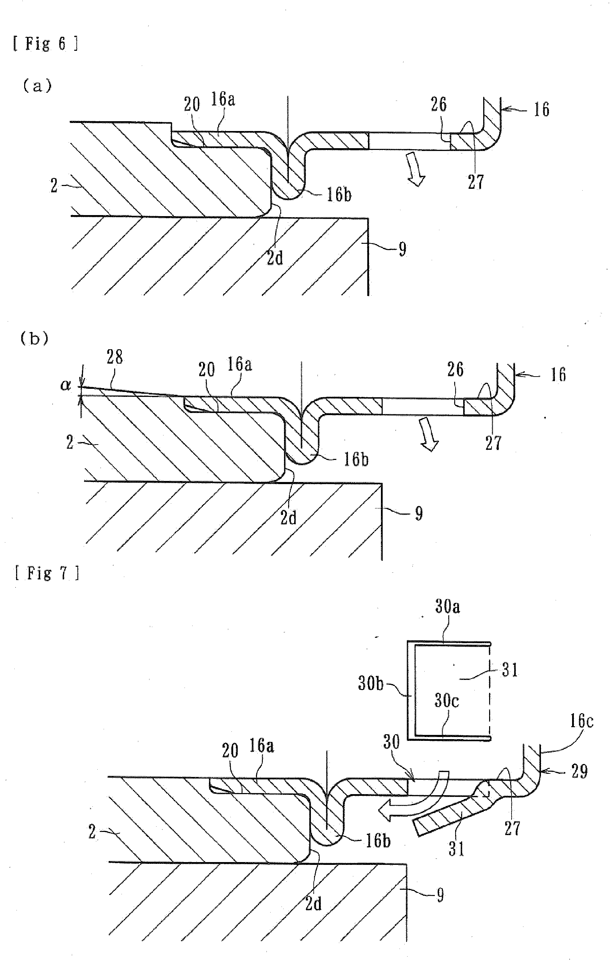

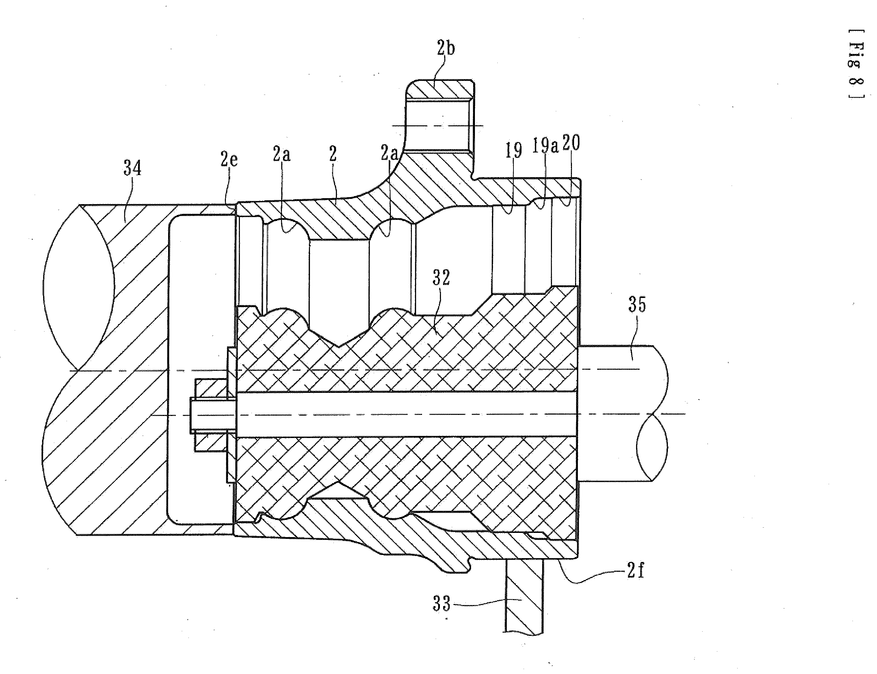

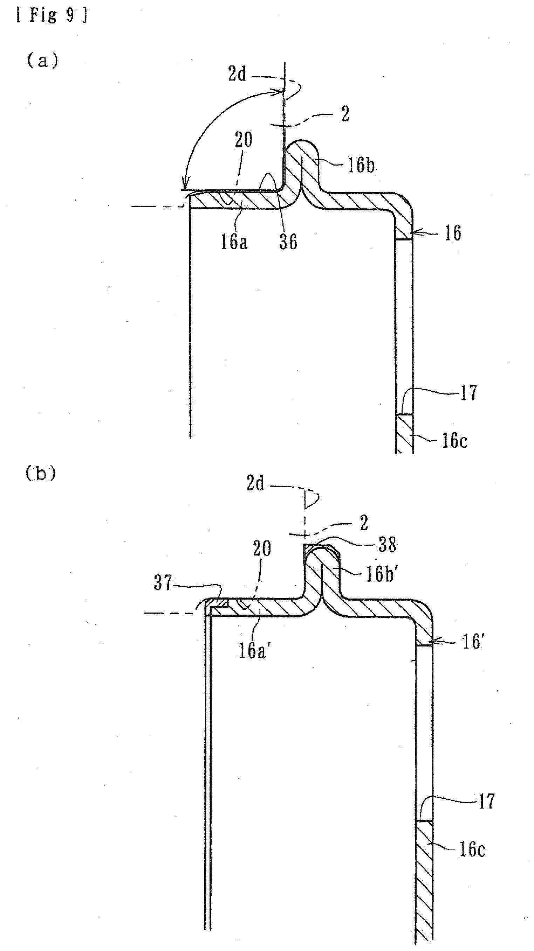

Fig.1 is a longitudinal-section view of a first embodiment of a wheel bearing apparatus of the present invention; Fig. 2 is a partially enlarged view of a detecting portion of Fig. 1; Fig.3 is a partially perspective view of a second cap of Fig. 1; Fig. 4(a) is a longitudinal-section view of the first cap, and Fig. 4(b) is a longitudinal-section view of the second cap; Fig.5 is a partially enlarged view of a drain portion of Fig. 1; Fig. 6(a) is a partially enlarged view of a fitting portion of the second cap of Fig. 1, and Fig. 6(b) is a partially enlarged view of a modification of Fig. 6(a); Fig.7 is a partially enlarged view of a modification of the second cap of Fig. 6; Fig.8 is an explanatory view showing a grinding method of the outer member of the wheel bearing apparatus of the present invention; Fig. 9(a) is a partially enlarged view of a fitting portion of the second cap of Fig. 1, and Fig. 9(b) is a partially enlarged view of a modification of Fig. 9(a). In the description below, an outer-side of the wheel bearing apparatus when it is mounted on a vehicle is referred to as "outboard-side" (a left-side in drawings) and an innerside of the wheel bearing apparatus when it is mounted on a vehicle is referred to as "inboard-side" (a right-side in drawings).

The wheel bearing apparatus of Fig. 1 is a so-called "third generation" type for a driven wheel and comprises an inner member 1, an outer member 2, and double row rolling elements (balls) 3, 3 contained between the inner and outer members 1 and 2. The inner member 1 includes the hub wheel 4 and an inner ring 5 press-fitted onto the hub wheel 4.

The hub wheel 4 is integrally formed, on its outboard-side end, with a wheel mount flange 6 for mounting a wheel (not shown) and formed, on its outer circumference, with one (i.e. outboard-side) inner raceway surface 4a from which axially extends a cylindrical portion 4b. Hub bolts 6a are secured on the wheel mounting flange 6 at its circumferentially equidistant positions.

The inner ring 5 is formed, on its outer circumference, with the other (i.e. inboard-side) inner raceway surface 5a and press-fitted onto the cylindrical portion 4b of the hub wheel 4 to form a double row angular contact ball bearing of back-to-back duplex type and axially secured on the hub wheel 4 by a caulked portion 4c formed by plastically deforming the end of the cylindrical portion 4b. This enables to reduce both weight and size of the wheel bearing apparatus. The inner ring 5 and balls 3, 3 are formed of high carbon chrome steel such as SUJ2 and dipping hardened to their cores as having hardness of 58∼64 HRC.

The hub wheel 4 is made of medium-high carbon steel such as S53C including carbon of 0.40∼0.80% by weight and is hardened by high frequency induction hardening as having a surface hardness of 58∼64 HRC over a region from an inboard-side base 6b of the wheel mounting flange 6 forming a seal land portion of a seal 8later described to the cylindrical portion 4b including the inner raceway surface 4a. The caulked portion 4c is not hardened so as to keep surface hardness after forging. Accordingly, it is possible to have sufficient mechanical strength against rotary bending load applied to the wheel mounting flange 6 and thus to improve the anti-fretting property of the cylindrical portion 4c on which the inner ring 5 is press-fitted and to smoothly perform the bending working of the caulking portion 4c without causing generation of micro cracks.

The outer member 2 is formed, on its outer circumference, with body mount flange 2b to be mounted on a knuckle 9 and on its inboard-side of the body mounting flange a cylindrical pilot portion 2c to be fitted into the knuckle 9. The outer member is also formed, on its inner circumference, with double row outer raceway surfaces 2a, 2a corresponding respectively to the double row inner raceway surfaces 4a, 5a of the hub wheel 4 and the inner ring 5. The double row rolling elements 3, 3 are contained between the outer and inner double row outer raceway surfaces 2a, 2a; 4a, 5a and rollably held therein by cages 7, 7. A seal 8 is mounted on the outboard-side annular opening formed by the outer member 2 and the inner member 1 and a first cap 15 (i.e. internal cap) later described more in detail is mounted on the inboard-side opening in order to prevent leakage of lubricating grease sealed within the bearing and entering of rain water or dusts from outside into the bearing.

Similarly to the hub wheel 4, the outer member 2 is formed of medium-high carbon steel such as S53C including carbon of 0.40∼0.80% by weight and the outer raceway surfaces 29, 29 are hardened by high frequency induction hardening as having a surface hardness of 58∼64 HRC.

The outboard-side seal 8 is formed as a united seal comprising a core metal 10 press-fitted into the outboard-side end of the outer member 2 and a sealing member 11 adhered to the core metal 10 via vulcanized adhesion. The core metal 10 is press-formed of austenitic stainless steel sheet (JIS SUS 304 etc) or cold rolled steel sheet (JIS SPCC etc.) as having a L-shaped cross-sectional configuration. On the other hand, the sealing member 11 is formed of synthetic rubber such as NBR (acrylonitrile-butadiene rubber) etc. and comprises a side lip 11a, a dust lip 11b and a grease lip 11c. The sealing member 11 covers the outer surface of the core metal 10 and forms a so-called half metal structure to protect the inside of the wheel bearing apparatus with increasing the sealability.

There are examples of material of the sealing ring 11 other than NBR, such as HNBR (hydrogenation acrylonitric-butadiene rubber), EPDM (ethylene propylene rubber), ACM (poly-acrylic rubber) superior in heat and chemical resistance, FKM (fluororubber) or silicone rubber.

Although it is shown here the wheel bearing apparatus formed by a double row angular contact ball bearing using balls as rolling elements 3, 3, the present invention is not limited to such a bearing and may be a double row tapered roller bearing using tapered rollers as rolling elements 3.

A pulser ring 12 is press-fitted onto the outer circumference of the inner ring 5. As shown in an enlarged view of Fig. 2, the pulser ring 12 comprises an annular supporting member 13 and a magnetic encoder 14 integrally adhered to the inboard-side surface of the annular supporting member 13 via vulcanized adhesion. The magnetic encoder 14 is formed of elastomer such as synthetic rubber into which ferritic magnetic powder is mingled so that N and S poles are alternately arranged along its circumference to form a rotary encoder for detecting the rotation of a wheel.

The annular supporting member 13 is press-formed of a steel plate such as ferritic stainless steel sheet (JIS SUS 430 etc.) or rust-prevented cold rolled steel sheet as having a L-shaped cross-section and comprises a cylindrical portion 13a press-fitted onto the outer circumference of the inner ring 5 and a standing portion 13b extending radially outward from the cylindrical portion 12a. The magnetic encoder 14 is integrally adhered to the inboard-side surface of the standing portion 13b.

As shown in Fig. 1, the inboard-side opening of the outer member 2 is closed by the first cap 15 press-fitted into the inner circumference of inboard-side end of the outer member 2. The first cap 15 has anti-corrosion property and is formed of non-magnetic steel sheet such as austenitic stainless steel sheet as having a cup-shape in order to prevent the detecting performance of the rotational speed sensor 21 from being adversely effected by the first cap 15. As shown in Fig. 4(a), the first cap 15 comprises a cylindrical fitting portion 15a press-fitted into the inner circumference of the inboard-side end of the outer member 2, a disc portion 15c extending radially inward from the fitting portion 15a via a radially reduced portion 15b and opposing to the magnetic encoder 14 via a small axial gap, and a bottom portion 15e extending from the disc portion 15c via a bent portion 15d to cover the inboard-side end of the inner member 1.

In this embodiment, an elastic member 18 of synthetic rubber such as NBR is integrally adhered to the radially reducing portion 15b of the first cap 15 by vulcanized adhesion as shown in Fig. 2. The elastic member 18 is arranged so that it does not project toward the inboard-side from the side of the disc portion 15c not so as to interfere with the rotational speed sensor21. The annular projection 18a projected radially outward from the fitting portion 15a. The fitting surface 19 of the inner circumference of the inboard-side end of the outer member 2 is formed so that the amplitude of chatter vibration in machining is limited to 3µm or less and the annular projection 18a is elastically deformed and tightly contacted with the end inner circumference of the outer member 2 when the first cap 15 is press-fitted into the outer member 2 to form the half metal structure in order to improve the sealability of the fitting portion 15a.

According to the present invention, a second cap (i.e. a sensor cap external of the first cap 15) 16 is also mounted on the outer member 2 inboard-side from the first cap 15. More particularly, a second annular fitting surface 20 is formed inboard-side from the first fitting surface 19 of the outer member 2 via a stepped portion 19a, and the second cap 16 is press-fitted into the second fitting surface 20 via a predetermined interference.

The second cap 16 is formed of rust-prevented and cold-rolled steel sheet as having a cup-shape and comprises as shown in Figs. 3 and 4(b) a cylindrical fitting portion 16a to be inserted into the inner circumference 20 of the inboard-side end of the outer member 2, a flange portion 16b formed as a double bent portion extending radially outward from the fitting portion 16a adapted to be closely contacted against the inboard-side end face 2d of the outer member 2, and a bottom portion 16c extending radially inward from the flange portion 16b to close an inboard-side opening of the outer member 2. An insert aperture 17 is formed in the bottom portion 16c at a position corresponding to the pulser ring 12 into which the rotational speed sensor 21 is inserted and mounted therein. Since the second cap 16 is formed with the flange portion 16b closely contacted with the end face 2d of the outer member 2, it is possible to increase the rigidity of the second cap and thus to improve the positioning accuracy in the rotational speed sensor. In addition, since the rotational speed sensor 21 is mounted in the horizontally positioned insert aperture 17, it is possible to suppress air gap variation between the rotational speed sensor 21 and the pulser ring 12 and thus to obtain stable detection accuracy even if the outer member 2 and the inner member 1 would be relatively inclined by a lateral load applied to them from a wheel.

A securing nut 23 is secured in an aperture 22 formed on the second cap 16 by caulking at the center of the second cap 16 and outboard-side of its bottom portion 16c. The securing nut may be secured on the second cap 16 e.g. by welding, adhesion or press-fitting. The rotational speed sensor 21 mounted in the aperture 17 of the second cap 16 is secured on the second cap 16 by fastening a bolt 25 into the nut 23 via a mounting member 24. Since the securing nut 23 is secured on the outboard-side surface of the bottom portion 16c of the second cap 16, the nut 23 can be pulled into the outboard-side surface of the bottom portion 16c when the bolt 25 is fastened and thus the rotational speed sensor 21 can be firmly secured on the second cap 16 by simply fastening the nut 23.

The rotational speed sensor 21 comprises an IC incorporated with a magnetic detecting element such as a Hall element, a magnetic resistance elements (MR elements) etc. for varying characteristics in accordance with flow of magnetic fluxes and a waveform shaping circuit for shaping output waveforms and forms part of the anti-lock brake system (ABS) of an automobile for detecting and controlling the rotational speed of a wheel. The rotational speed sensor 21 is arranged oppositely to the pulser ring 12 via the first cap 15 with being inserted until the tip of the sensor 21 abuts against or closed to the disc portion 15c of the first cap 15. (Fig. 2) This makes it possible to provide a wheel bearing apparatus which can obtain a desirable air gap and improve the assembling workability with eliminating complicated air-gap adjustment and surely seal the inside of the wheel bearing apparatus by the first cap 15 provided with the elastic member 18 on the radially reducing portion 15b.

The second cap 16 is formed of rust-preventing film by rust-preventing coating of cation electro-deposition coating. Although the cation electro-deposition coating is performed by connecting articles to a negative electrode, anion electro-deposition coating in which articles are connected to a positive electrode may be used to the present invention. The anion electro-deposition coating is characterized in that colors of coating is stable and the deposition temperature can be set low, however the cation electro-deposition coating of epoxy resin is more preferable due to its superiorities in anti-rust-preventing power and adhesion power of coating.

According to the present invention, phosphorus acid zinc processing is carried out on the surface of the second cap 16 as base processing (preprocessing) of the cation electro-deposition. The phosphorous acid zinc processing can chemically roughen a surface of steel sheet and improves adhesion of coating due to strong bite of coating to the surface of second cap. Sealer treatment may be additionally performed after the phosphorous acid zinc processing. The sealer is a kind of metal surface treating agent and a chemical film can be formed by performing a short-time dipping or spraying of 30 seconds through 2 minutes. With a so-called formation process, it is possible to ensure great coating sealability and to form protection coating of the material to thereby exert strong anti-rust function and improved conductivity. That is, it is possible to prevent entrainment of air during the electro-deposition of coating due to smoothing of micro surface of the phosphorous acid zinc coating by performing of phosphorus acid zinc processing as base processing of the cation electro-deposition and additional sealer treatment. The entrainment of air into coating would cause surface defects (irregularity in the surface) such as uneven undulations and is not preferable.

According to the present invention, since the surface of the second cap 16 is formed with rust-preventing coating of cation electro-deposition and phosphorous acid zinc treated as its base treatment, it is possible to keep a smooth surface of the fitting surface with embedding micro irregularities and accordingly, it is possible to prevent generation of rust in the fitting portion 16a of the second cap 16 for a long term and thus to obtain good sealability in the fitting portion between the second cap 16 and the second fitting surface 20 and end face 2d of the outer member 2.

A thickness t1 of the first cap 15 is set smaller than a thickness t2 of the second cap 16. More particularly, the thickness t2 of the second cap 16 is set to 1.0∼1.5 mm and the thickness t1 of the first cap 15 is set to 0.2∼1.0 mm. This makes it possible to set the air gap smaller and thus to improve the detecting accuracy. In addition, it is possible to reduce the weight of the wheel bearing apparatus and its manufacturing cost. When the thickness t1 is less than 0.2 mm, it is difficult to accurately form the first cap 15 and, on the contrary when the thickness t1 exceeds 1.0 mm, the air gap will be increased and thus desirable magnetic characteristics necessary for accurate detection cannot be obtained even when

Further according to the present invention, a drain 26 is formed on the bottom portion 16c of a bulged portion 27 of the second cap 16 at its region near to the ground as shown in Fig. 3 and Fig. 4(b). The bulged portion 27 is projected toward the inboard-side from the bottom portion 16c by a predetermined distance L. The bulged portion 27 is effective when the knuckle 9 is projected toward the inboard-side from the end face 2d of the outer member 2 as shown in Fig. 5 but not when it is flush with the end face 2d of the outer member. Accordingly, by forming the drain 26 in the bulged portion 27 in a radially cut-through manner, it is possible to effectively discharge foreign matters outside without being disturbed by the knuckle 9 of a vehicle even when the foreign matters such as rain water enter into the second cap 16.

According to the present invention, a depth of the second fitting surface 20 of the outer member 2 is set larger than the thickness t2 of the second cap 16 as shown in Fig. 6(a). This makes it possible to smoothly discharge outside foreign matters entered in the second cap 16 through the drain 26.

As shown in Fig. 6(b), it is preferable that the inner circumference 28 between the first fitting surface 19 and the second fitting surface 20 of the outer member 2 is formed as a tapered surface with its radius gradually increasing at an angle α toward the end face 2d of the outer member 2. This makes it possible to more smoothly guide foreign matters entered within the second cap 16 to the bulged portion 27 without residence.

Fig. 7 shows a second cap 29 which is a modification of the previously described second cap 16. Similarly to the second cap 16, the second cap 29 comprises a cylindrical fitting portion 16a to be inserted into the inner circumference 20 of the inboard-side end of the outer member 2 and press-formed of rust-prevented cold-rolled steel sheet to a cup shape, a flange portion 16b formed as a double bent portion extending radially outward from the fitting portion 16a adapted to be closely contacted against the inboard-side end face 2d of the outer member 2, and a bottom portion 16c extending radially inward from the flange portion 16b to close an inboard-side opening of the outer member 2. This second cap 29 is different from the previous second cap 16 basically only in structure of a drain 30.

Similarly to the previous second cap 16, this drain 30 is also formed in the bulged portion 27 of the second cap 29. However, the drain 30 is formed as a rectangular tongue shape by three punched slits 30a, 30b, 30c and bent radially outward toward the ground. The bent tongue 31 forms a protecting wall for prevent entering of muddy water or pebbles splashed by tires to the inside of the second cap 29 and thus can maintain the speed detecting accuracy and improve the reliability of an ABS.

Although it is shown second caps 29 formed with single drain 30, a plurality of drains may be formed on the second cap 29. The presence of the drain or drains enables foreign matters entered in the second cap to be easily discharged without longtime residence of foreign matters and thus prevents structural parts from being adversely effected.

Then a grinding method of the outer member 2 will be described using Fig. 8. In this grinding steps, the outer member 2 is ground in regions of the double row outer raceway surfaces 2a, 2a, the first fitting surface 19 on which the first cap [not shown) is press-fitted, and a second fitting surface 20 formed on the inner circumference of the outer member 2 at a further inboard-side from the first fitting surface 19 via a stepped portion 19a and on which the second cap (not shown) is press-fitted, The double row outer raceway surfaces 2a, 2a, the first fitting surface 19 and the second fitting surface 20 are simultaneously ground by a formed grinding wheel 32 in the grinding steps after the heat treatment step with high frequency induction quenching.

The grinding is performed by rotating the formed grinding wheel 32 in one direction to have desired configurations and dimensions under conditions in which a shoe 33 for centering the outer member 2 is slide-contacted with the inboard-side outer circumference 2f of the outer member 2 and a backing plate 34 is abutted against the outboard-side end face 2e. The formed grinding wheel 32 is previously conditioned by a rotary dresser (not shown) so that the grinding wheel 32 has desired configurations and dimensions and then positioned relative to the outer member 2 under a condition mounted on a quill 35.

According to the present invention, since the first fitting surface 19 and the second fitting surface 20 are ground by a formed grinding wheel simultaneously with the double row outer raceway surfaces 2a, 2a, it is possible to improve the accuracy in the roundness and coaxiality of each fitting surface and thus to improve the sealability of the fitting portions. In addition, the simultaneous grinding can reduce working steps and therefore manufacturing costs. If the outer member is formed with single fitting surface and the first cap 15 and second cap 16 are to be fitted into the single fitting surface, it is afraid that the thinner first cap would be deformed during the press-fitting step in addition to reduction of assembling workability due to increase of press-fitting stroke of the first cap 15. On the other hand according to the present invention, since the second fitting surface 20 is formed at the inboard-side of the first fitting surface 19 via the stepped portion 19a, it is possible to suppress the press-fitting stroke minimum and improve the assembling workability as well as to prevent deformation of the first cap during the press-fitting process and thus improve the reliability of the wheel bearing apparatus.

Also according to the present invention, the second cap 16 is coated by rust-preventing coating film 36 (Fig. 9(a)) comprising cation electro-deposition. It is possible to cover whole the surface of the second cap 16 with the rust-preventing coating film 36, however the rust-preventing coating film 36 may be actually arranged at abutting regions of the second cap 16 against the second fitting surface 20 and the inboard-side end surface 2d of the outer member 2 as shown in Fig. 9(a) in order to reduce the manufacturing cost. Although the cation electro-deposition coating is performed by connecting articles to a negative electrode, anion electro-deposition coating in which articles are connected to a positive electrode may be used to the present invention. The anion electro-deposition coating is characterized in that colors of coating is stable and the deposition temperature can be set low, however the cation electro-deposition coating of epoxy resin is more preferable due to its superiorities in anti-rust-preventing power and adhesion power of coating.

As described above, phosphorus acid zinc processing is carried out on the surface of the second cap 16 as base processing (preprocessing) of the cation electro-deposition. The phosphorous acid zinc processing can chemically roughen a surface of steel sheet and improves adhesion of coating due to strong bite of coating to the surface of second cap. Sealer treatment may be additionally performed after the phosphorous acid zinc processing. The sealer is a kind of metal surface treating agent and a chemical film can be formed by performing a short-time dipping or spraying of 30 seconds through 2 minutes. With a so-called formation process, it is possible to ensure great coating sealability and to form protection coating of the material to thereby exert strong anti-rust function and improved conductivity. That is, it is possible to prevent entrainment of air during the electro-deposition of coating due to smoothing of micro surface of the phosphorous acid zinc coating by performing of phosphorus acid zinc processing as base processing of the cation electro-deposition and additional sealer treatment. The entrainment of air into coating would cause surface defects such as uneven undulations and is not preferable.

As described above, since the surface of the second cap 16 is formed with rust-preventing film 36 of cation electro-deposition at abutting regions of the second cap 16 against the second fitting surface 20 and the inboard-side end surface 2d of the outer member 2 and phosphorous acid zinc treated as its base treatment, it is possible to keep a smooth surface of the fitting surface with embedding micro irregularities and accordingly, it is possible to prevent generation of rust in the fitting portion 16a of the second cap 16 for a long term and thus to obtain good sealability in the fitting portion between the second cap 16 and the second fitting surface 20 and end face 2d of the outer member 2.

Packing members 37, 38 can be adhered on the second cap 16' in order to improve the sealability of the fitting portion of the second cap 16'. More particularly as shown in Fig. 9(b), the packing members 37, 38 comprising synthetic rubber such as NBR are integrally adhered to abutting regions between the second cap 16' and the second fitting surface 20 and the inboard-side end face 2d of the outer member 2 (half-metal structure) by vulcanized adhesion. This improves the sealability and protects the inside of the wheel bearing apparatus.

### Second Embodiment

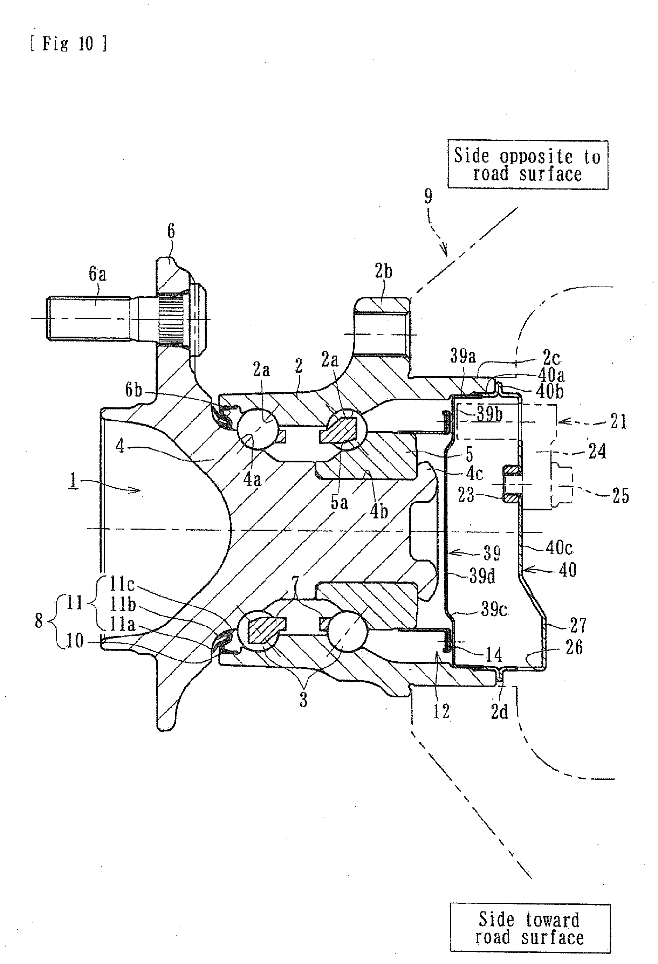

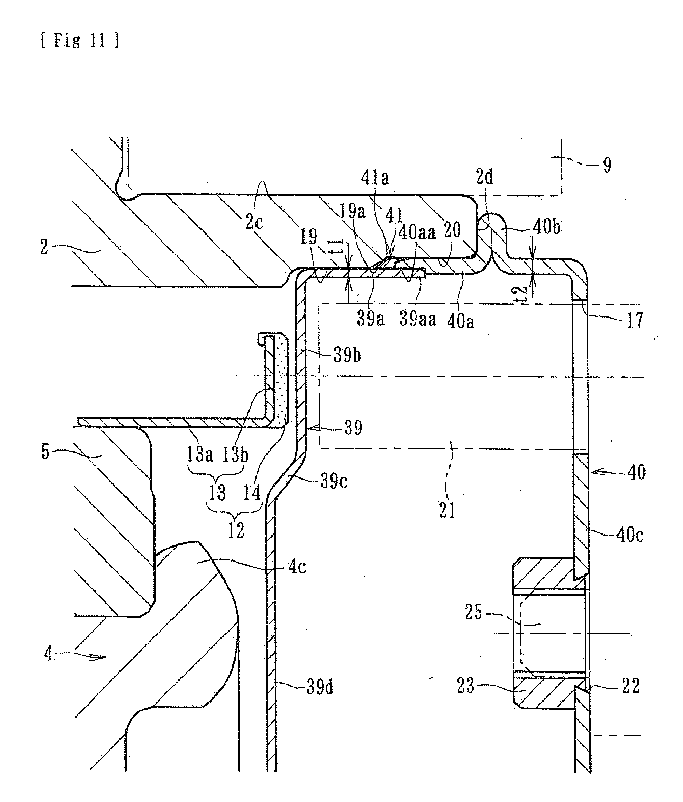

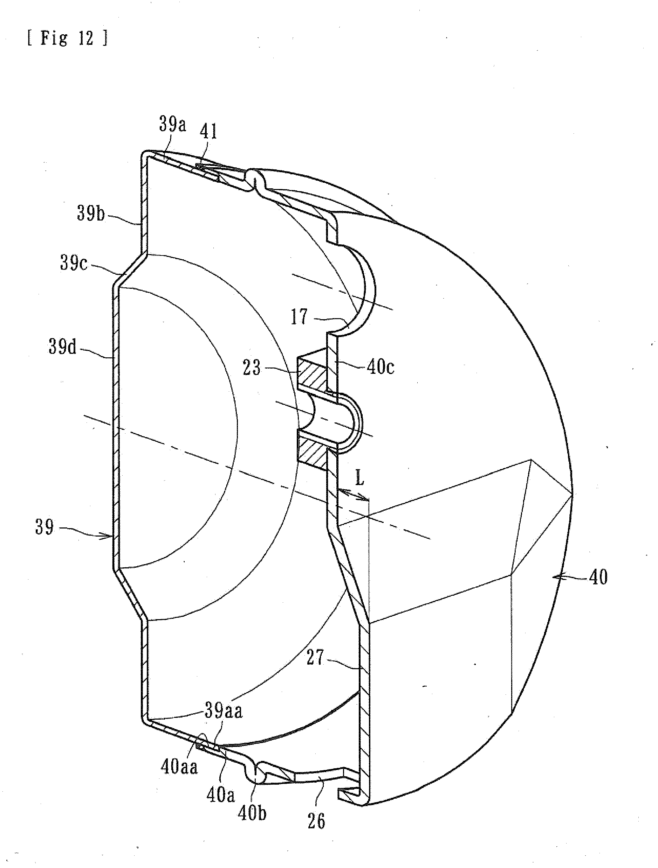

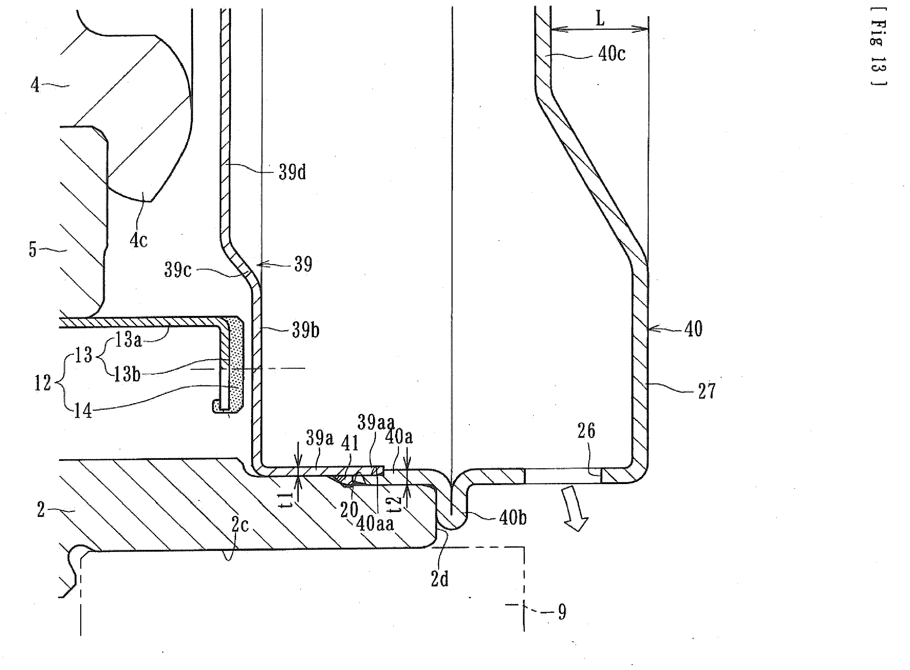

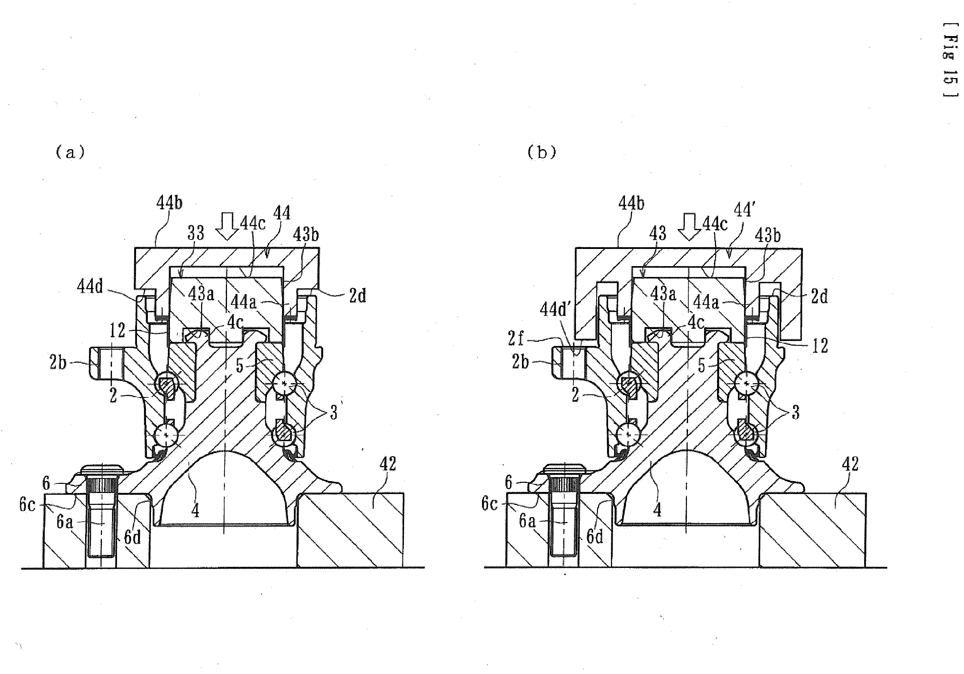

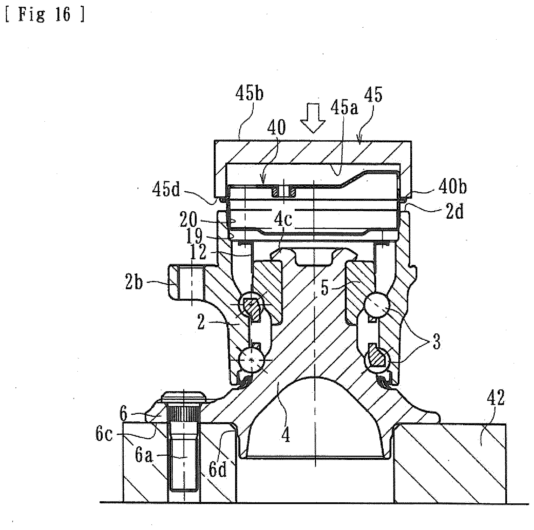

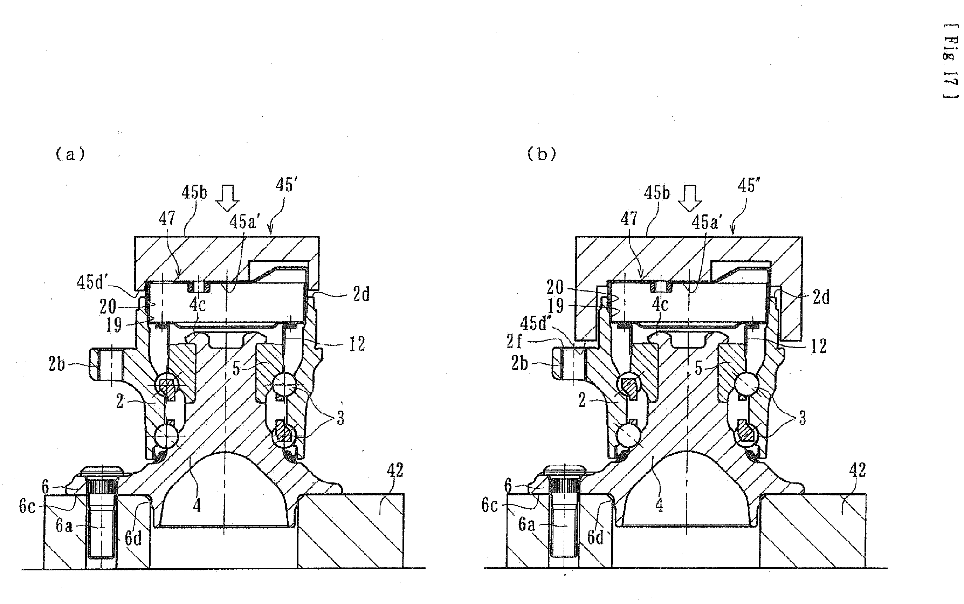

Fig.10 is a longitudinal-section view of a second embodiment of a wheel bearing apparatus of the present invention; Fig.11 is a partially enlarged view of a detecting portion of Fig. 10; Fig.12 is a partially enlarged perspective view of a united condition of the first and second caps of Fig. 10; Fig.13 is a partially enlarged view of a drain portion of Fig. 10; Fig.14 is an explanatory view showing an assembling method of the wheel bearing apparatus of the present invention; Fig. 15(a) is an explanatory view of an assembling method of a pulser ring of Fig. 14 and Fig. 15(b) is an explanatory view of a modification of Fig. 15(a); Fig. 16 is an explanatory view showing an assembling method of the first and second caps of Fig. 14; Fig. 17(a) is an explanatory view showing an assembling method of the first and second caps of Fig. 12 and Fig. 17(b) is an explanatory view of a modification of Fig. 17(a). This second embodiment is same as the first embodiment except that the first cap and the second cap are united. Accordingly same reference numerals are used also in this embodiment for designating same structural elements as those used in the previous embodiment.

The wheel bearing apparatus of Fig. 10 is a so-called "third generation" type for a driven wheel and comprises an inner member 1, an outer member 2, and double row rolling elements 3, 3 contained between the inner and outer members 1 and 2. The inner member 1 includes the hub wheel 4 and an inner ring 5 press-fitted onto the hub wheel 4.

A pulser ring 12 is press-fitted onto the outer circumference of the inner ring 5. As shown in an enlarged view of Fig. 11, the pulser ring 12 comprises an annular supporting member 13 and a magnetic encoder 14 integrally adhered to the inboard-side surface of the annular supporting member 13 via vulcanized adhesion.

The inboard-side opening of the outer member 2 is closed by a first cap 39 mounted on the outer member 2. The first cap 39 has anti-corrosion property and is formed of non-magnetic steel sheet such as austenitic stainless steel sheet as having a cup-shape in order to prevent the detecting performance of the rotational speed sensor 21 from being adversely effected by the first cap 39. As shown in Fig. 11, the first cap 39 comprises a cylindrical fitting portion 39a press-fitted into the inner circumference of the inboard-side end of the outer member 2, a disc portion 39b extending radially inward from the fitting portion 39a and opposing to the magnetic encoder 14 via a small axial gap, and a bottom portion 39d extending from the disc portion 39b via a bent portion 39c and bulged toward the outboard-side to close the inboard-side opening of the outer member 2.

According to this embodiment, a second cap 40 is mounted on an inboard-side from the first cap 39. More particularly, a second annular fitting surface 20 is formed inboard-side from the first fitting surface 19 of the outer member 2 via the stepped portion 19a and the second cap 40 is press-fitted into the second fitting surface 20 via a predetermined interference. The first cap 39 is previously fitted into the second cap 40 and united therewith.

The second cap 40 is formed of cold-rolled steel sheet as having a cup-shape and comprises a cylindrical fitting portion 40a to be inserted into the second fitting surface 20 of the outer member 2, a flange portion 40b formed as a double bent portion extending radially outward from the fitting portion 40a and adapted to be closely contacted against the inboard-side end face 2d of the outer member 2, and a bottom portion 40c extending radially inward from the flange portion 40b to close an inboard-side opening of the outer member 2.

A stepped portion 40aa is formed on an opening end of the fitting portion 40a of the second cap 40 and an opening end 39aa of the fitting portion 39a of the first cap 39 is press-fitted into the stepped portion 40aa of the second cap 40. In this case, the width dimensions of the stepped portion 40aa of the second cap 40 and the fitting portion 39a of the first cap 39 are determined so that the air gap between the rotational speed sensor 21 mounted in the insert aperture 17 of the second cap 40 and the magnetic encoder 14 can be exactly set by press-fitting the opening end 39aa of the fitting portion 39a of the first cap 39 into the second cap 40 until the opening end 39aa of the fitting portion 39a of the first cap 39 is abutted against a wall of the stepped portion 40aa. This also enables to prevent deformation of the first cap 39 even when the thickness t1 of the first cap 39 is is set smaller than the thickness t2 of the second cap 40.

An elastic member 41 of synthetic rubber such as NBR is integrally adhered by vulcanized adhesion to the connected portion between the fitting portion 39a of the first cap 39 and the fitting portion 40a of the second cap 40. The elastic member 41 has an annular projection 41a projected radially outward from the fitting portion 40a of the second cap 40 and is closely contacted with the outer circumference of the fitting portion 39a of the first cap 39. The second fitting surface 20 of the outer member 2 is ground so that the surface roughness Ra is limited to 1µm or less and the annular projection 41a is elastically deformed and tightly contacted with the second fitting surface 20 of the outer member 2 when the second cap 40 is press-fitted into the outer member 2 to form the half metal structure in order to improve the sealability of the fitting portion 39a.

The insert aperture 17 is formed in the bottom portion 40c at a position corresponding to the magnetic encoder 14 into which the rotational speed sensor 21 is inserted and mounted therein. Since the second cap 40 is formed with the flange portion 40b closely contacted with the end face 2d of the outer member 2, it is possible to increase the rigidity of the second cap 40 and thus to improve the positioning accuracy in the rotational speed sensor. In addition, since the rotational speed sensor 21 is mounted in the horizontally positioned insert aperture 17, it is possible to suppress air gap variation between the rotational speed sensor 21 and the magnetic encoder 14 and thus to obtain stable detection accuracy even if the outer member 2 and the inner member 1 would be relatively inclined by a lateral load applied to them from a wheel.

Similarly to the previous embodiment, the rotational speed sensor 21 is inserted into the aperture 17 until it is abutted against or nearly closed to the disc portion 39b of the first cap 39. Accordingly, it is possible to obtain a desirable air gap and to improve the assembling workability with eliminating a complicated air gap adjustment. In addition, since the elastic member 41 is adhered to the connecting portion between the first and second caps 39, 40, it is possible to provide a wheel bearing apparatus which can surely seal the inside of the bearing apparatus.

If trying to press-fit the first cap 39 and the second cap 40 into a single simple cylindrical fitting surface, it is afraid not only that the press-fitting stroke of the first cap 39 would be increased the assembling workability would be reduced but that the thinner first cap 39 would be deformed during the press-fitting step. According to the present invention since the second fitting surface 20 is formed in addition to the first fitting surface 19 via the stepped portion 19a, it is possible to improve the assembling workability and prevent deformation of the first cap 39 with suppressing the press-fitting stroke to minimum.

The second cap 40 is formed of stainless-steel sheet or ferrous steel sheet and whole surface of the ferrous steel sheet is then formed with rust-preventing film of cation electro-deposition coating. Since the rust-preventing film of cation electro-deposition coating is formed on the abutting portion between the second cap and the outer member 2 and the phosphorus acid zinc processing is carried out on the surface of the second cap 40 as base processing (preprocessing) of the cation electro-deposition, it is possible to prevent generation of rust in the fitting portion 40a of the second cap 40 for a long term with preventing the rust-preventing film being peeled off during press-fitting of the second cap 40 and thus to obtain good sealability in the fitting portion 40a between the second cap 40 and the second fitting surface 20 and end face 2d of the outer member 2.

Vulcanized adhesive is applied prior to performing the cation electro-deposition coating on the second cap 40. In this case, it is possible to obtain a good sealability due to formation of resin film from solidified vulcanized adhesive by applying the vulcanized adhesive on the whole surface of the second cap, not only on the abutting portion of the end face 2d and the second fitting surface 20.

According to this embodiment, a drain 26 is radially outwardly formed in the bottom portion 40c of the second cap 40 as shown in Fig. 12. The drain 26 is formed in a bulged portion 27 formed on the bottom portion 40c of the second cap 40 at a region nearer to the ground. The bulged portion 27 is projected toward the inboard-side from the bottom portion 16c by a predetermined dimension L. As shown in a partially enlarged view of Fig. 13, the bulged portion 27 is effective when the knuckle 9 is not in a plane of the end face 2d of the outer member 2 and projects there from toward the inboard-side. That is, the drain 26 formed in the bulged portion 27 in a radially cut-through manner projected from the end face 2d of the outer member 2 toward the inboard-side can discharge foreign matters entered in the second cap 40 through the drain 26 without being interrupted by the knuckle 9.

Then, a method for assembling the wheel bearing apparatus will be described with reference to Figs. 14∼16. First of all, the wheel bearing apparatus is placed on a cradle (not shown) as shown in Fig. 14 with positioning the axis of the bearing apparatus vertical and the hub wheel bottom. Then, the pulser ring 12 is press-fitted onto the outer circumference of the inner ring 5 from the inboard-side opening of the outer member 2 and the first cap 39 and the second cap 40 are press-fitted into the first fitting surface 19 and the second fitting surface 20 of the outer member respectively. In this case, the first cap 39 and the second cap 40 are previously united together by fitting the opened end 39aa of the fitting portion 39a of the first cap 39 into the stepped portion 40aa of the fitting portion 40a of the second cap 40, and the first cap 39 and the second cap 40 are press-fitted into the first fitting surface 19 and the second fitting surface 20 of the outer member in this united state. Then, a method for assembling of the pulser ring 12 and the united first and second caps 39, 40 will be described in detail.

As shown in Fig. 15(a), assembly of the pulser ring 12 to the wheel bearing apparatus is performed by positioning and securing a guiding jig 43 on the end of the inner ring 5 of the wheel bearing apparatus vertically placed on the cradle 42. The guiding jig 43 has a substantially cylindrical body having a smooth outer circumference and formed on its one end with an annular groove 43a for accommodating the caulked portion 4c and on the other end with a tapered outer circumference for centering the pulser ring 12.

The guiding jig 43 has an axial reference surface which is the outboard-side surface 6c of the wheel mounting flange 6 and a radial reference surface which is a pilot portion 6d formed on the outboard-side end of the hub wheel 4.

Then, the pulser ring 12 is placed on the tapered surface 43b of the guiding jig 43 and pressed down to a predetermined position by a pressing jig 44. The pressing jig 44 has a cup-shaped cross-section and is formed on its bottom end with a projected pressing portion 44a for pressing down the pulser ring 12, on its top end with a flat pressing surface 44b and on its middle portion with an abutting surface 44d for abutting against the inboard-side end face 2d of the outer member 2. The pulser ring 12 is pressed down by a press machine laid on the pressing surface 44b until the abutting surface 44d is abutted against the end face 2d of the outer member 2. In this case, the inner diameter of a recessed portion 44c of the pressing jig 44 is formed slightly larger than the outer diameter of the guiding jig 43 so that the pressing jig 44 can be fitted onto the guiding jig 43 via a small guiding gap. In addition, the depth of the recessed portion 44c is set so that the top of the guiding jig 43 does not contact with the ceiling of the recessed portion 44c when the abutting surface 44d is abutted against the end face 2d of the outer member 2. That is, the axial position of the pulser ring 12 can be determined based on the position of the inboard-side end face 2d of the outer member 2.

As shown in Fig. 15(b), the axial position of the pulser ring 12 may be set by abutting the abutting surface 44d' of the pressing jig 44' against the inbord-side surface 2f of the outer member 2.

Then, assembly of the unit of the first cap and the second cap according to the second embodiment to the wheel bearing apparatus will be described with reference to Fig. 16. In the case of the second cap 40 (second embodiment according to the present invention), the first and second caps 39, 40 formed as a unit are press-fitted into the first and second fitting surfaces 19, 20 respectively. In this case, the positioning of both the first and second caps 39, 40 can be simultaneously completed by abutting a abutting surface 45d formed on the end of a recessed portion 45a against the flanged portion 40b of the second cap 40 and then by pressing down the flanged portion 40b until its side surface is abutted against the inboard-side surface 2d of the outer member 2. In other flanged second cap (e.g. a second cap 52 formed with a flanged portion 40b according to a fifth embodiment), the assembling process can be similarly performed after having united the first and second caps 49, 52 together.

On the other hand, in case of assembly of a flangeless second cap (e.g. a flangeless second cap 47 according to a third embodiment) to the wheel bearing apparatus, a pressing jig 45' has a cup-shaped configuration and formed with a recessed portion 45a' for guiding the outer circumference of the second cap 47 and pressing down the second cap 47. The axial positioning of the second cap 47 can be completed by setting a depth of the recessed portion 45a' so that an abutting surface 45d' is abutted against the inboard-side end face 2d of the outer member 2 (Fig. 17(a)), or so that a abutting surface 45d" is abutted against the inboard-side surface 2f of the body mounting flange 2b (Fig. 17(b)). According to this assembling method, since the axial position of the pulser ring 12 and the axial position of the second cap are determined by the same pressing-down reference surface, it is possible to minimize variations of the distance i.e. air gap between the magnetic encoder 14 and the bottom portion 40c of the second cap 47 on which the rotational speed sensor 21. A similar axial positioning can be performed as to a flangeless second cap (e.g. a flangeless second cap 49 according to a fourth embodiment).

In the press-fitting operations of the first cap 39, 46, 48 and the second cap 40, 47, 49, 52 of the second through fifth embodiments, since the first and second caps are previously united together and press-fitted into the outer member 2 in the united condition, it is possible to press-fit both the first and second caps by one press-fitting operation and thus reduce the assembling steps to half and achieve a lower manufacturing cost of the wheel bearing apparatus. In addition, an exact positioning can be easily achieved only by abutting the flanged portion 40b of the second cap 40, 52 against the end face 2d of the outer member 2 or by abutting the pressing jig 45 against the end face 2d of the outer member 2 or against the inboard-side surface 2f of the body mounting flange 2b without any complicated positioning step.

### Third Embodiment

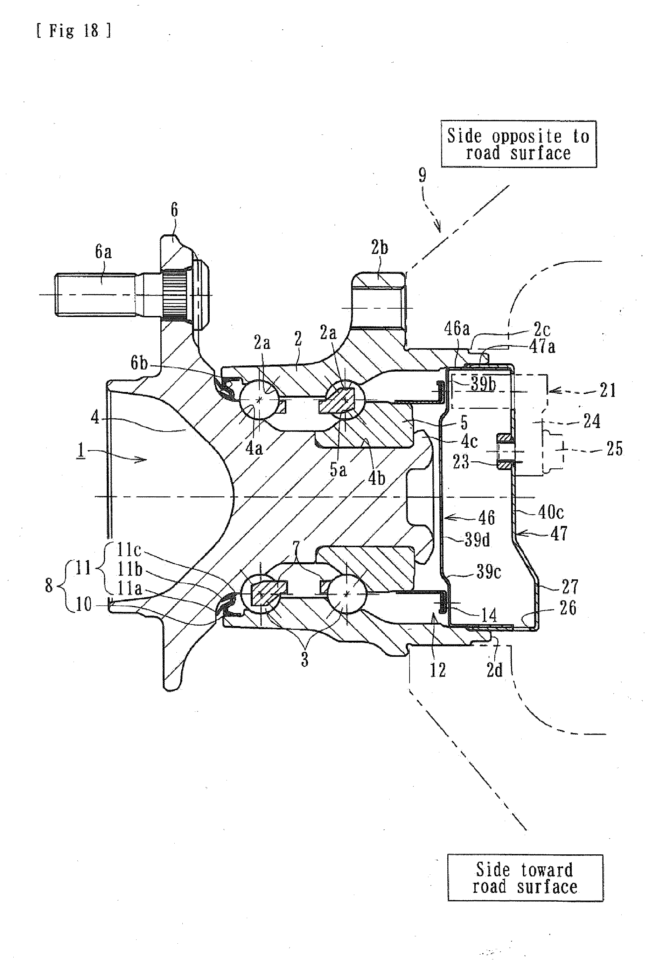

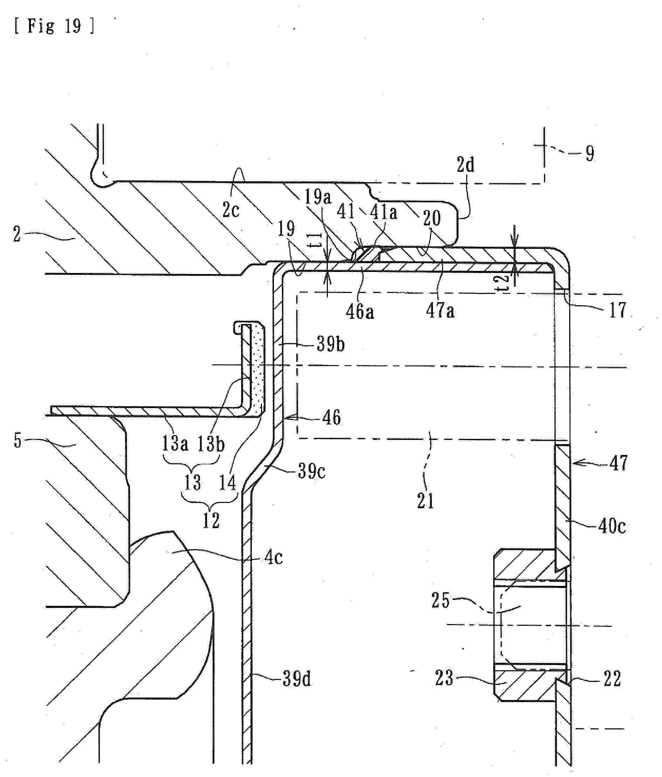

Fig.18 is a longitudinal-section view of a third embodiment of a wheel bearing apparatus of the present invention; and Fig.19 is a partially enlarged view of a detecting portion of Fig. 18. This third embodiment is same as the second embodiment (Fig. 10) except structures in the first cap and the second cap. Accordingly same reference numerals are used also in this embodiment for designating same structural elements as those used in the previous embodiments.

The wheel bearing apparatus of Fig. 18 is a so-called "third generation" type for a driven wheel and comprises an inner member 1, an outer member 2, and double row rolling elements 3, 3 contained between the inner and outer members 1 and 2. According to this embodiment, the pulser ring 12 is press-fitted onto the outer circumference of the inner ring 5 and the first cap 46 and the second cap 47 are press-fitted into the inner circumference of the outer member 2 to close the inboard-side opening of the outer member 2.

The first cap 46 is press-formed of anti-corrosion and non-magnetic steel sheet such as austenitic stainless steel sheet as having a cup-shape. As shown in Fig. 19, the first cap 46 comprises a cylindrical fitting portion 46a press-fitted into the inner circumference of the inboard-side end of the outer member 2, a disc portion 39b extending radially inward from the fitting portion 46a and opposing to the magnetic encoder 14 via a small axial gap, and a bottom portion 39d extending from the disc portion 39b via a bent portion 39c bulged toward the outboard-side to close the inboard-side opening of the outer member 2.

On the other hand, the second cap 47 is press-formed of stainless-steel sheet or ferrous steel sheet to a cup-shaped configuration (a surface of the ferrous steel sheet is then performed with rust-preventing treatment) and comprises a cylindrical fitting portion 47a press-fitted into the second fitting surface 20 of the outer member 2 and a bottom portion 40c extending radially inward from one end of the fitting portion 47a to close the inboard-side opening of the outer member 2. An elastic member 41 is adhered or vulcanizing adhered to the tip end of the fitting portion 47a and has an annular projection 41a projected from the outer circumference of the second cap 47. The inner circumference of the elastic member 41 is closely contacted with the outer circumference of the fitting portion 46a of the first cap 46.

According to this embodiment, the fitting portion 46a of the first cap 46 is previously fitted into the fitting portion 47a of the second cap 47 to form a cap unit. In this case, the fitting portion 46a of the first cap 46 and the fitting portion 47a of the second cap 47 have predetermined width dimensions, and the fitting portion 46a of the first cap 46 is press-fitted into the fitting portion 47a of second cap 47 until the end face of the fitting portion 46a of the first cap 46 is abutted against the bottom portion 40c of the second cap 47. This makes it possible to accurately set the air gap between the rotational speed sensor 21 mounted in the aperture 17 of the second cap 47 and the magnetic encoder 14.

According to this embodiment, since the fitting portion 46a of the first cap 46 is press-fitted into the fitting portion 47a of the second cap 47 and previously united together and the fitting portion 47a of the second cap 47 is press-fitted into the second fitting portion 20 of the outer member 2 in the united condition, it is possible to prevent deformation of the first cap 46 during its press-fitting operation if the thickness t1 of sheet forming the first cap 46 is set smaller than the thickness t2 of the second cap 47.

### Fourth Embodiment

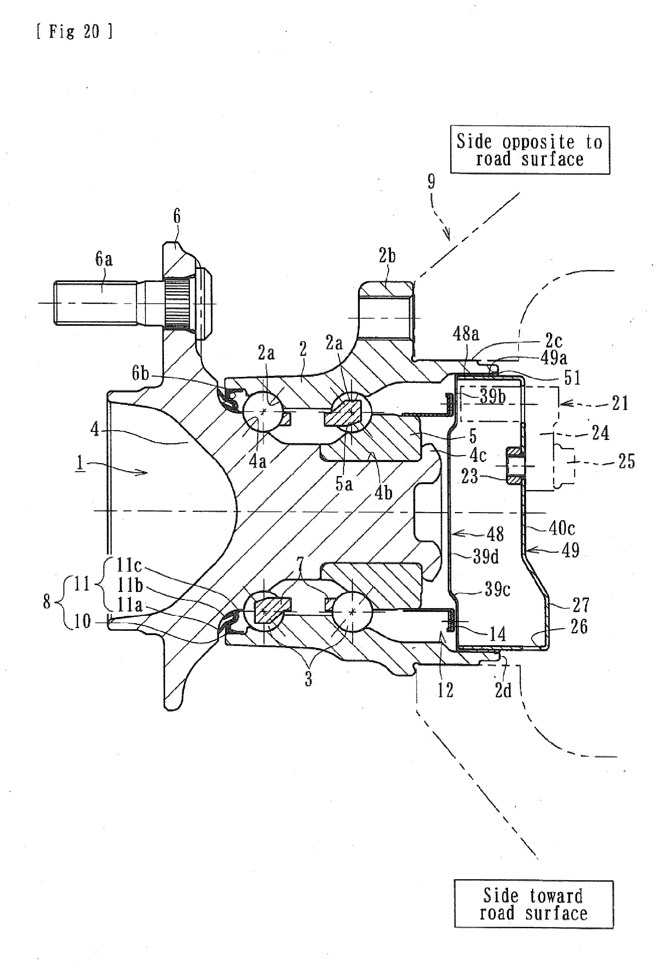

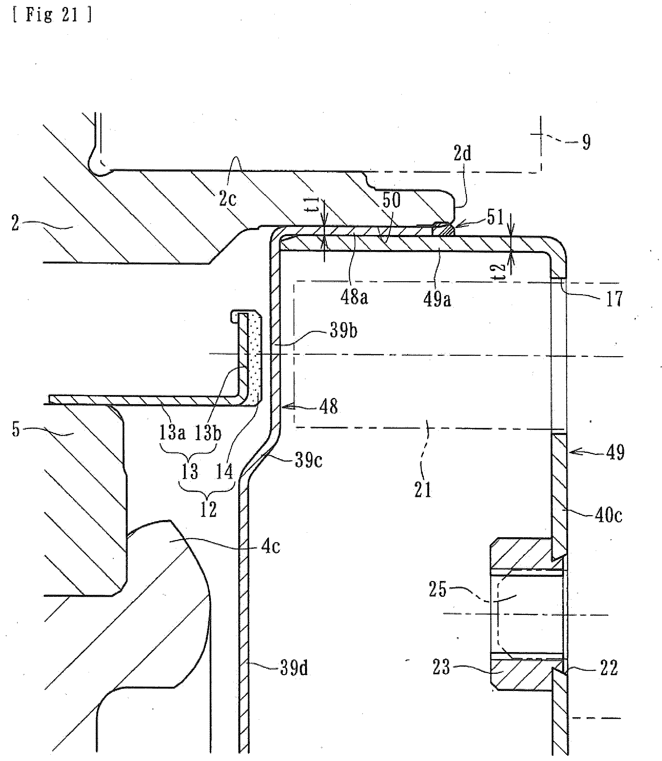

Fig. 20 is a longitudinal-section view of a fourth embodiment of a wheel bearing apparatus of the present invention; and Fig. 21 is a partially enlarged view of a detecting portion of Fig. 20. This fourth embodiment is same as the third embodiment (Fig. 18) except structures in the first cap and the second cap. Accordingly same reference numerals are used also in this embodiment for designating same structural elements as those used in the previous embodiments.

The wheel bearing apparatus of Fig. 20 is a so-called "third generation" type for a driven wheel and comprises an inner member 1, an outer member 2, and double row rolling elements 3, 3 contained between the inner and outer members 1 and 2. According to this embodiment, the pulser ring 12 is press-fitted onto the outer circumference of the inner ring 5 and the first cap 48 and the second cap 49 are press-fitted into the inner circumference of the outer member 2 to close the inboard-side opening of the outer member 2.

The first cap 48 is press-formed of anti-corrosion and non-magnetic steel sheet such as austenitic stainless steel sheet as having a cup-shape. As shown in Fig. 21, the first cap 48 comprises a cylindrical fitting portion 48a press-fitted into the fitting surface 50 of the outer member 2, a disc portion 39b extending radially inward from the fitting portion 48a and opposing to the magnetic encoder 14 via a small axial gap, and a bottom portion 39d extending from the disc portion 39b via a bent portion 39c and bulged toward the outboard-side to close the inboard-side opening of the outer member 2.

On the other hand, the second cap 49 is press-formed of stainless-steel sheet or ferrous steel sheet to a cup-shaped configuration (a surface of the ferrous steel sheet is then performed with rust-preventing treatment) and comprises a cylindrical fitting portion 49a press-fitted into the fitting portion 48a of the first cap 48 and a bottom portion 40c extending radially inward from one end of the fitting portion 49a to close the inboard-side opening of the outer member 2.

According to this embodiment, the fitting portion 49a of the second cap 49 is previously fitted into the fitting portion 48a of the first cap 48 to form a cap unit. In this case, the fitting portion 48a of the first cap 48 and the fitting portion 49a of the second cap 49 have predetermined width dimensions, and the fitting portion 49a of the second cap 49 is press-fitted into the fitting portion 48a of first cap 48 until the end face of the fitting portion 49a of the second cap 49 is abutted against the disc portion 39b of the first cap 48. This makes it possible to accurately set the air gap between the rotational speed sensor 21 mounted in the aperture 17 of the second cap 47 and the magnetic encoder 14 and also to prevent deformation of the first cap 48 during its press-fitting operation if the thickness t1 of sheet forming the first cap 48 is set smaller than the thickness t2 of the second cap 49.

An elastic member 51 of synthetic rubber such as NBR is integrally adhered to the connecting portion between the fitting portion 48a of the first cap 48 and the fitting portion 49a of the second cap 49. The elastic member 51 is formed to be radially outwardly projected from the outer circumference of the fitting portion 48a of the first cap and is elastically deformed and tightly contacted with the end inner circumference of the outer member 2 when the first cap 48 is press-fitted into the outer member 2 to form the half metal structure in order to improve the sealability of the fitting portion 48a of the first cap 48.

According to this embodiment, since the fitting portion 49a of the second cap 49 is previously fitted into the fitting portion 48a of the first cap 48 to form a cap unit and the fitting portion 48a of the first cap 48 is securely press-fitted into the fitting surface 50 of the outer member 2, it is possible to make the fitting width of the first and second caps 48, 49 large and thus to prevent deformation of the first cap 48 during its press-fitting operation if the thickness t1 of sheet forming the first cap 48 is set smaller than the thickness t2 of the second cap 49.

### Fifth embodiment

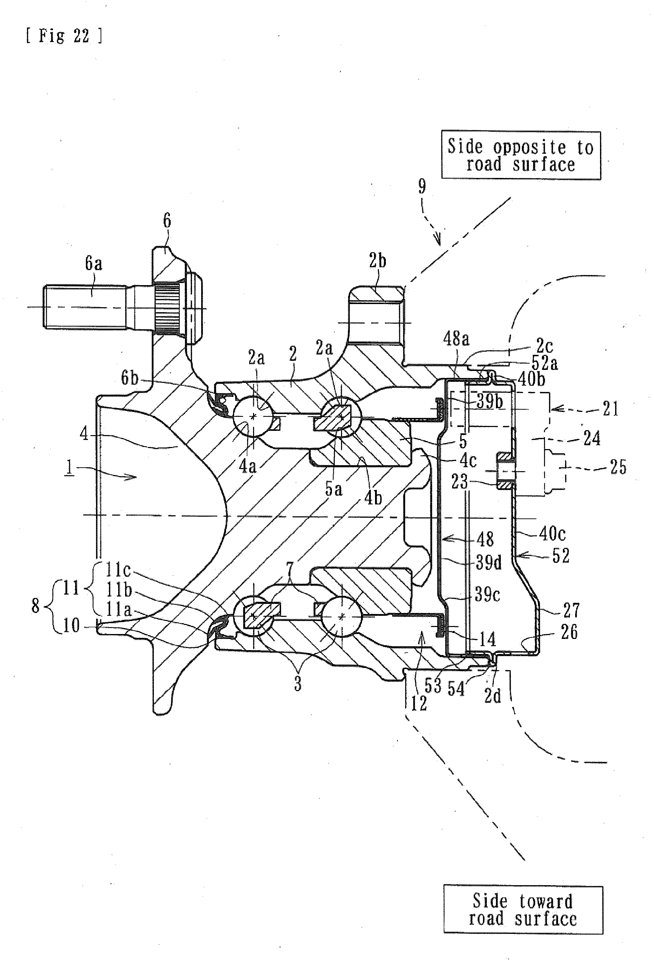

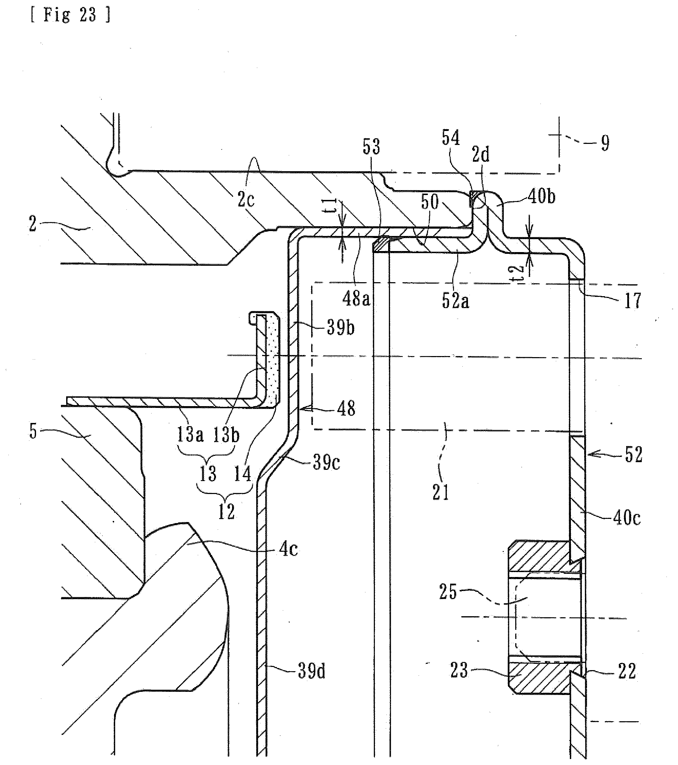

Fig. 22 is a longitudinal-section view of a fifth embodiment of a wheel bearing apparatus of the present invention; and Fig. 23 is a partially enlarged view of a detecting portion of Fig. 22. This fifth embodiment is same as the fourth embodiment (Fig. 20) except structures in the second cap. Accordingly same reference numerals are used also in this embodiment for designating same structural elements as those used in the previous embodiments.

This wheel bearing apparatus is also a so-called "third generation" type for a driven wheel and comprises an inner member 1, an outer member 2, and double row rolling elements 3, 3 contained between the inner and outer members 1 and 2. According to this embodiment, the pulser ring 12 is press-fitted onto the outer circumference of the inner ring 5 and the first cap 48 and the second cap 52 are press-fitted into the inner circumference of the outer member 2 to close the inboard-side opening of the outer member 2.

As shown in the enlarged view of Fig. 21, the first cap 48 comprises a cylindrical fitting portion 48a press-fitted into the fitting surface 50 of the outer member 2, and a fitting portion 52a of the second cap 52 is fitted into the fitting portion 48a of the first cap 48.

The second cap 52 is press-formed of stainless-steel sheet or ferrous steel sheet to a cup-shaped configuration (a surface of the ferrous steel sheet is then performed with rust-preventing treatment) and comprises a cylindrical fitting portion 52a, a flange portion 40b formed as a double bent portion extending radially outward from the fitting portion 52a and adapted to be closely contacted against the inboard-side end face 2d of the outer member 2, and a bottom portion 40c extending radially inward from the flange portion 40b to close an inboard-side opening of the outer member 2.

According to this embodiment, the fitting portion 52a of the second cap 52 is previously fitted into the fitting portion 48a of the first cap 48 to form a cap unit. In this case, the fitting portion 48a of the first cap 48 and the fitting portion 52a of the second cap 52 have predetermined width dimensions, and the fitting portion 48a of the first cap 48 is press-fitted onto the fitting portion 52a of second cap 52 until the end face of the fitting portion 48a of the first cap 48 is abutted against the side surface of the flanged portion 40b of the second cap 52. The air gap between the rotational speed sensor 21 mounted in the insert aperture 17 of the second cap 52 and the magnetic encoder 14 can be exactly set by press-fitting the first and second caps 48, 52 into the fitting surface 50 of the outer member 2 until the side surface of the flanged portion 40b is abutted against the end face 2d of the outer member 2.

An elastic member 53 of synthetic rubber such as NBR is integrally adhered to the connecting portion between the fitting portion 48a of the first cap 48 and the fitting portion 52a of the second cap 52. This elastic member 53 is formed to be radially outwardly projected from the outer circumference of the fitting portion 52a of the second cap 52 and is elastically deformed and tightly contacted with the fitting portion 48a of the first cap 48 when the second cap 52 is press-fitted into the first cap 48 to improve the sealability of the fitting portion 48a of the first cap 48 and the fitting portion 52a of the second cap 52. In addition, another elastic member 54 of synthetic rubber such as NBR is integrally adhered to the connecting portion between the flanged portion 40b of the second cap 52 and the outer member 2. This enables to improve the sealability of the first cap 48 and thus to protect the inside of the wheel bearing apparatus.

According to this embodiment, since the fitting portion 52a of the second cap 52 is previously fitted into the fitting portion 48a of the first cap 48 to form a cap unit and the fitting portion 48a of the first cap 48 is securely press-fitted into the fitting surface 50 of the outer member 2, it is possible to increase the rigidity of the cap unit and thus to prevent deformation of the first cap 48 during its press-fitting operation if the thickness t1 of sheet forming the first cap 48 is set smaller than the thickness t2 of the second cap 52.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The present invention can be applied to any wheel bearing apparatus of an inner ring rotational type for a driven wheel type using balls or tapered rollers as rolling elements.

### Description of Reference numerals

- 1: inner member
- 2: outer member
- 2a: outer raceway surface
- 2b: body mounting flange
- 2c: pilot portion
- 2d: inboard-side end face of outer member
- 2d: outboard-side end face of outer member
- 2f: outer circumference of inboard-side end of outer member
- 3: rolling element
- 4: hub wheel
- 4a, 5a: inner raceway surface
- 4b: cylindrical portion
- 4c: caulked portion
- 5: inner ring
- 6: wheel mounting flange
- 6a: hub bolt
- 6b: inboard-side base of wheel mounting flange
- 6c: outboard-side base of wheel mounting flange
- 6d: pilot portion of hub wheel
- 7: cage
- 8: seal
- 9: knuckle
- 10: core metal
- 11: sealing member
- 11a: side lip
- 11b: dust lip
- 11c: grease lip
- 12: pulser ring
- 13: annular supporting member
- 13a: cylindrical portion
- 13b: standing portion
- 14: magnetic encoder
- 15, 39, 46,48: first cap
- 15a, 16a, 16a', 39a, 42a, 46a, 47a, 48a, 49a, 52a: fitting portion
- 15b, 39b: radially reducing portion
- 15c, 39c: disc portion
- 15d, 39d: bent portion
- 15e, 16c, 39e, 40c: bottom portion
- 16, 29, 16', 40, 47, 49, 52: second cap
- 16b, 16b', 40b: flanged portion
- 17: insert aperture
- 18, 41, 51, 53, 54: elastic member
- 18a, 41a: annular projection
- 19: first fitting surface
- 19a: stepped portion
- 20: second fitting surface
- 21: rotational speed sensor
- 22: aperture
- 23: securing nut
- 24: mounting member
- 25: mounting bolt
- 26,30: drain
- 27: bulged portion
- 28: inner circumference of end of outer member
- 30a, 30b, 30c: slit
- 31: protecting wall
- 32: formed grinding wheel
- 33: shoe
- 34: bucking plate
- 35: quill
- 36: rust-preventing coating film
- 37, 38: packing member
- 39aa: opening end of fitting portion of first cap
- 40aa: stepped portion of fitting portion of second cap
- 42: cradle
- 43: guiding jig
- 44, 44', 45, 45', 45": pressing jig
- 44a: pressing portion
- 44b, 45b: pressing surface
- 44c, 45a, 45a': recessed portion
- 44d, 44d', 45d, 45d', 45d": abutting surface
- 50: fitting surface
- 101: outer member
- 101a: outer raceway surface
- 102: ball
- 103: hub wheel
- 103a: cylindrical portion
- 104: inner ring
- 104a: inner raceway surface
- 105: cage
- 106: caulked portion
- 107: cover (first cap)
- 108: bottom portion
- 108a: flat portion
- 108b: bulged portion
- 109: cylindrical portion
- 110: abutting portion
- 111: sealing member
- 112: magnetic encoder
- 113: sensor
- 114: sensor holding plate
- 115: bottom portion
- 116: cylindrical fitting portion
- 117: through aperture
- 118: mounting aperture
- 119: nut
- 120: space
- 121: bolt
- 122: mounting flange
- 123: inside space
- L: projected length of bulged portion from bottom portion
- t1: sheet thickness of first cap
- t2: sheet thickness of second cap
- α: inclined angle of inner circumference of end

## Claims

1. A wheel bearing apparatus comprising:
an outer member (2) integrally formed on its inner circumference with double row outer raceway surfaces (2a, 2a);
an inner member (1) including a hub wheel (4) and at least one inner ring (5), the hub wheel (4) being integrally formed on its one end with a wheel mounting flange (6) and having a cylindrical portion (4b) axially extending from the wheel mounting flange (6), the inner ring (5) being press-fitted onto the cylindrical portion (4b) of the hub wheel (4), the inner member (1) being formed on its outer circumference with double row inner raceway surfaces (4a, 5a) opposing to the double row outer raceway surfaces (2a, 2a);
double row rolling elements (3, 3) contained between the inner raceway surfaces (4a, 5a) and outer raceway surfaces (2a, 2a) of the inner member (1) and outer member (2);
a pulser ring (12) adapted to be fitted onto the outer circumference of the inner ring (5) and having characteristics alternately and equidistantly varying along its circumferential direction;
a cup-shaped second cap (16, 16', 29, 40, 47, 49, 52) press-formed of steel sheet and fitted on the inboard-side end of the outer member (2);
a rotational speed sensor (21) mounted on the second cap (16, 16', 29, 40, 47, 49, 52) at a radially outer position thereof, the rotational speed sensor (21) being arranged oppositely to the pulser ring (12) via a predetermined axial air gap; a cup-shaped first cap (15, 39, 46, 48) being press-fitted into the inner circumference of an inboard-side end of the outer member (2) via a predetermined interference, being press-formed of non-magnetic austenitic stainless steel sheet and comprising a cylindrical fitting portion (15a, 39a, 46a, 48a) press-fitted into the inner circumference of the inboard-side end of the outer member (2), a disc portion (15c, 39b) extending radially inward from the fitting portion (15a, 39a, 46a, 48a) and opposing to the pulser ring (12) via a small axial gap;
the rotational speed sensor (21) being arranged oppositely to the pulser ring (12) via the first cap (15, 39, 46, 48) with being abutted against or closed to the disc portion (15c, 39b) of the first cap (15, 39, 46, 48); and
the second cap (16, 16', 29, 40, 47, 49, 52) being press-fitted into the inner circumference of an inboard-side end of the outer member (2) via a predetermined interference;
**characterized in that**
a bulged portion (27) is formed on a bottom portion (16c, 40c) of the second cap (16, 16', 29, 40, 47, 49, 52) at a region nearer to the ground and
that a drain (26, 30) which is radially cut-through is formed in a bottom wall of the bulged portion (27).

2. A wheel bearing apparatus of claim 1 wherein a first fitting surface (19) is formed on the inner circumference of the inboard-side end of the outer member (2) and a second fitting surface (20) is formed on the inner circumference of the outer member (2) at a further inboard-side from the first fitting surface (19) via a stepped portion (19a), and wherein the first cap (15, 39, 46, 48) is press-fitted onto the first fitting surface (19) and the second cap (16, 16', 29, 40, 47, 49, 52) is press-fitted onto the second fitting surface (20).

3. A wheel bearing apparatus of claim 2 wherein the first fitting surface (19) and the second fitting surface (20) are ground by a formed grinding wheel simultaneously with the double row outer raceway surfaces (2a, 2a).

4. A wheel bearing apparatus of claim 1 or 2 wherein the second cap (16, 16', 29, 40, 47, 49, 52) comprises a cylindrical fitting portion (16a, 16a', 40a, 47a, 49a, 52a) fitted on the inner circumference of the inboard-side end of the outer member (2), a flange portion (16b, 16b', 40b) formed as a double bent portion extending radially outward from the fitting portion (16a, 16a', 40a, 47a, 49a, 52a) adapted to be closely contacted against the inboard-side end face (2d) of the outer member (2), and the bottom portion (16c, 40c) extending radially inward from the flange portion (16b, 16b', 40b) to close an inboard-side opening of the outer member (2), and wherein an insert aperture (17) is formed in the bottom portion (16c, 40c) at a position corresponding to the pulser ring (12) into which the rotational speed sensor (21) is inserted and mounted therein.

5. A wheel bearing apparatus of claim 2 or 3 wherein a depth of the second fitting surface (20) is larger than the thickness (t2) of the second cap (16, 16', 29, 40, 47).

6. A wheel bearing apparatus of any one of claims 1∼3 wherein the inner circumference (28) between the first fitting surface (19) and the second fitting surface (20) of the outer member (2) is formed as a tapered surface with its radius gradually increasing at an angle (α) toward the opening of the outer member (2).

7. A wheel bearing apparatus of any one of claims 1, 2, 4 or 5 wherein the second cap (16, 16', 29, 40, 47, 49, 52) is coated by rust-preventing coating film (36) comprising cation electro-deposition.

8. A wheel bearing apparatus of any one of claims 1, 2, 4 or 5 wherein the second cap (16, 16', 29, 40, 47, 49, 52) is formed of rust-prevented steel sheet and an elastic member (37, 38, 41, 53, 54) is integrally adhered on the second cap (16, 16', 29, 40, 47, 49, 52) at a portion contacted with the outer member (2).

9. A wheel bearing apparatus of claim 8 wherein the elastic member of the second cap (16) is formed of rust-preventing coating film (36) comprising cation electro-deposition.

10. A wheel bearing apparatus of claim 8 wherein the elastic member of the second cap (16') is a packing member (37, 38) formed of synthetic rubber integrally adhered to the second cap (16') by vulcanized adhesion.

11. A wheel bearing apparatus of claim 1 wherein the drain (30) is formed as a tongue by punching and bending the bottom wall of the bulged portion (27).

12. A wheel bearing apparatus of claim 1 wherein a radially reduced portion (15b) is formed between the fitting portion (15a) and the disc portion (15c) of the first cap (15) and an elastic member (18) of synthetic rubber is integrally adhered to the radially reduced portion (15b) by vulcanized adhesion, and wherein the elastic member (18) is arranged so that it does not project from the side surface of the disc portion (15c) toward the inboard-side to prevent the elastic member (18) from interfering with the rotational speed sensor (21) and the elastic member (18) is formed with an annular projection (18a) projecting radially outward from the fitting portion (15a).

13. A wheel bearing apparatus of claim 1 or 2 wherein the second cap (40, 47, 49, 52) is formed of steel sheet and press-fitted via a predetermined interference into the inner circumference of the inboard-side end of the outer member (2) in an overlapped state with the first cap (39, 46, 48).

14. A wheel bearing apparatus of claim 13 wherein a stepped portion (40aa) is formed on an opening end of the fitting portion (40a) of the second cap (40) and the stepped portion (40aa) and the fitting portion (39a) of the first cap (39) have predetermined width dimensions, and wherein an opening end (39aa) of the fitting portion (39a) of the first cap (39) is press-fitted into the second cap (40) until the opening end (39aa) of the fitting portion (39a) of the first cap (39) is abutted against a wall of the stepped portion (40aa).

15. A wheel bearing apparatus of claim 13 wherein the fitting portion (46a) of the first cap (46) and the fitting portion (47a) of the second cap (47) have predetermined width dimensions, and wherein the fitting portion (46a) of the first cap (46) is press-fitted into the fitting portion (47a) of second cap (47) until the end face of the fitting portion (46a) of the first cap (46) is abutted against the bottom portion (40c) of the second cap (47).

16. A wheel bearing apparatus of claim 13 wherein the fitting portion (48a) of the first cap (48) and the fitting portion (49a) of the second cap (49) have predetermined width dimensions, and wherein the fitting portion (49a) of the second cap (49) is press-fitted into the fitting portion (48a) of first cap (48) until the end face of the fitting portion (49a) of the second cap (49) is abutted against the disc portion (39b) of the first cap (48).

17. A wheel bearing apparatus of claim 13 wherein the second cap (52) has a flange portion (40b) formed as a double bent portion extending radially outward from the fitting portion (52a) adapted to be closely contacted against the inboard-side end face (2d) of the outer member (2), wherein the fitting portion (48a) of the first cap (48) and the fitting portion (52a) of the second cap (52) have predetermined width dimensions, and wherein the fitting portion (48a) of the first cap (48) is press-fitted onto the fitting portion (52a) of second cap (52) until the opening end of the fitting portion (48a) of the first cap (48) is abutted against the side surface of the flange (40b) portion, and the second cap (52) is press-fitted into the outer member (2) until the side surface of the flange portion (40b) is abutted against the end face (2d) of the outer member (2).

18. A wheel bearing apparatus of claim 13 wherein the elastic member (41) of synthetic rubber are integrally adhered by vulcanized adhesion to the connected portion between the fitting portion (39a, 46a) of the first cap (39, 46) and the fitting portion (40a, 47a) of the second cap (40, 47), and wherein the elastic member (41) is elastically deformed and press-contacted with the fitting surface (20) of the outer member (2) and the elastic member (41) is closely contacted to the fitting portion (39a, 46a) of the first cap (39, 46).

## Patentansprüche

1. Radlagervorrichtung, umfassend:
ein äußeres Element (2), das auf seinem Innenumfang einstückig mit zweireihigen äußeren Laufbahnflächen (2a, 2a) ausgebildet ist;
ein inneres Element (1), das eine Radnabe (4) und mindestens einen Innenring (5) umfasst, wobei die Radnabe (4) an ihren einen Ende einstückig mit einem Radbefestigungsflansch (6) ausgebildet ist und einen zylindrischen Abschnitt (4b) aufweist, der sich axial vom Radbefestigungsflansch (6) erstreckt, der Innenring (5) auf den zylindrischen Abschnitt (4b) der Radnabe (4) pressgepasst ist, das innere Element (1) auf seinem Außenumfang mit zweireihigen inneren Laufbahnflächen (4a, 5a) gegenüber den zweireihigen äußeren Laufbahnflächen (2a, 2a) ausgebildet ist;
zweireihige Rollelemente (3, 3), die zwischen den inneren Laufbahnflächen (4a, 5a) und den äußeren Laufbahnflächen (2a, 2a) des inneren Elements (1) und des äußeren Elements (2) enthalten sind;
einen Impulsgeberring (12), der ausgelegt ist, um auf den Außenumfang des Innenrings (5) aufgesetzt zu werden, und Charakteristiken aufweist, die entlang seiner Umfangsrichtung abwechselnd und äquidistant variieren;
eine becherförmige zweite Kappe (16, 16', 29, 40, 47, 49, 52), die (2), die aus Stahlblech pressgeformt und am innenseitigen Ende des äußeren Element (2) montiert ist;
einen Drehzahlsensor (21), der an der zweiten Kappe (16, 16', 29, 40, 47, 49, 52) in einer radial äußeren Position davon befestigt ist, wobei der Drehzahlsensor (21) über einen vorbestimmten axialen Luftspalt gegenüber dem Impulsgeberring (12) angeordnet ist; eine becherförmige erste Kappe (15, 39, 46, 48), die über ein vorbestimmtes Übermaß in den Innenumfang eines innenseitigen Endes des äußeren Elements (2) pressgepasst ist, aus nichtmagnetischem austenitischem Edelstahlblech pressgeformt ist und einen zylindrischen Passabschnitt (15a, 39a, 46a, 48a) umfasst, der in den Innenumfang des innenseitigen Endes des äußeren Elements (2) pressgepasst ist, einen Scheibenabschnitt (15c, 39b), der sich vom Passabschnitt (15a, 39a, 46a, 48a) und gegenüber dem Impulsgeberring (12) über einen kleinen axialen Spalt nach innen erstreckt;
wobei der Drehzahlsensor (21) über die erste Kappe (15, 39, 46, 48) gegenüber dem Impulsgeberring (12) angeordnet ist, wobei er am Scheibenabschnitt (15c, 39b) der ersten Kappe (15, 39, 46, 48) anliegt oder sich daran annähert; und
wobei die zweite Kappe (16, 16', 29, 40, 47, 49, 52) über ein vorbestimmtes Übermaß in den Innenumfang eines innenseitigen Endes des äußeren Elements (2) pressgepasst ist;
**dadurch gekennzeichnet, dass**
ein vorgewölbter Abschnitt (27) an einem unteren Abschnitt (16c, 40c) der zweiten Kappe (16, 16', 29, 40, 47, 49, 52) in einer Region näher zum Boden ausgebildet ist, und dass ein Ablass (26, 30), der radial durchgebrochen ist, in einer unteren Wand des vorgewölbten Abschnitts (27) ausgebildet ist.

2. Radlagervorrichtung nach Anspruch 1, wobei eine erste Passfläche (19) auf dem Innenumfang des innenseitigen Endes des äußeren Elements (2) ausgebildet ist, und eine zweite Passfläche (20) auf dem Innenumfang des äußeren Elements (2) auf einer weiter innen liegenden Seite von der ersten Passfläche (19) über einen Stufenabschnitt (19a) ausgebildet ist, und wobei die erste Kappe (15, 39, 46, 48) auf die erste Passfläche (19) pressgepasst ist, und die zweite Kappe (16, 16', 29, 40, 47, 49, 52) auf die zweite Passfläche (20) pressgepasst ist.

3. Radlagervorrichtung nach Anspruch 2, wobei die erste Passfläche (19) und die zweite Passfläche (20) durch ein geformtes Schleifrad gleichzeitig mit den zweireihigen äußeren Laufbahnflächen (2a, 2a) geschliffen werden.

4. Radlagervorrichtung nach Anspruch 1 oder 2, wobei die zweite Kappe (16, 16', 29, 40, 47, 49, 52) einen zylindrischen Passabschnitt (16a, 16a', 40a, 47a, 49a, 52a), der am Innenumfang des innenseitigen Endes des äußeren Elements (2) montiert ist, einen Flanschabschnitt (16b, 16b', 40b), der als ein doppelt gebogener Abschnitt ausgebildet ist, der sich vom Passabschnitt (16a, 16a', 40a, 47a, 49a, 52a) radial nach außen erstreckt und ausgelegt ist, um mit der innenseitigen Endfläche (2d) des äußeren Elements (2) in engen Kontakt gebracht zu werden, und den unteren Abschnitt (16c, 40c) umfasst, der sich vom Flanschabschnitt (16b, 16b', 40b) radial nach innen erstreckt, um eine innenseitige Öffnung des äußeren Elements (2) zu schließen, und wobei eine Einführöffnung (17) im unteren Abschnitt (16c, 40c) in einer dem Impulsgeberring (12) entsprechenden Position ausgebildet ist, in welche der Drehzahlsensor (21) eingeführt wird und in welcher derselbe befestigt wird.

5. Radlagervorrichtung nach Anspruch 2 oder 3, wobei eine Tiefe der zweiten Passfläche (20) größer als die Dicke (t2) der zweiten Kappe (16, 16', 29, 40, 47) ist.

6. Radlagervorrichtung nach einem der Ansprüche 1 bis 3, wobei der Innenumfang (28) zwischen der ersten Passfläche (19) und der zweiten Passfläche (20) des äußeren Elements (2) als eine konisch zulaufende Fläche ausgebildet ist, deren Radius in einem Winkel (α) zur Öffnung des äußeren Elements (2) allmählich zunimmt.

7. Radlagervorrichtung nach einem der Ansprüche 1, 2, 4 oder 5, wobei die zweite Kappe (16, 16', 29, 40, 47, 49, 52) mit einem Rostschutzbeschichtungsfilm (36) beschichtet ist, der Kationen-Elektrotauchlackieren umfasst.

8. Radlagervorrichtung nach einem der Ansprüche 1, 2, 4 oder 5, wobei die zweite Kappe (16, 16', 29, 40, 47, 49, 52) aus gegen Rost geschütztem Stahlblech gebildet ist, und ein elastisches Element (37, 38, 41, 53, 54) an einem Abschnitt, der mit dem äußeren Element (2) in Kontakt ist, einstückig an die zweite Kappe (16, 16', 29, 40, 47, 49, 52) geklebt ist.

9. Radlagervorrichtung nach Anspruch 8, wobei das elastische Element der zweiten Kappe (16) aus Rostschutzbeschichtungsfilm (36) gebildet ist, der Kationen-Elektrotauchlackieren umfasst.

10. Radlagervorrichtung nach Anspruch 8, wobei das elastische Element der zweiten Kappe (16') aus Kunstkautschuk gebildetes Verpackungsteil ist, das durch Vulkanisierungskleben einstückig an die zweite Kappe (16') geklebt ist.

11. Radlagervorrichtung nach Anspruch 1, wobei der Ablass (30) durch Stanzen und Biegen der unteren Wand des vorgewölbten Abschnitts (27) als eine Zunge ausgebildet ist.

12. Radlagervorrichtung nach Anspruch 1, wobei ein radial reduzierter Abschnitt (15b) zwischen dem Passabschnitt (15a) und dem Scheibenabschnitt (15c) der ersten Kappe (15) ausgebildet ist, und ein elastisches Element (18) aus Kunstkautschuk durch Vulkanisierungskleben einstückig an den radial reduzierten Abschnitt (15b) geklebt ist, und wobei das elastische Element (18) so angeordnet ist, dass es von der Seitenfläche des Scheibenabschnitts (15c) nicht zur Innenseite vorsteht, um zu verhindern, dass das elastische Element (18) den Drehzahlsensor (21) beeinträchtigt, und das elastische Element (18) mit einem ringförmigen Vorsprung (18a) ausgebildet ist, der vom Passabschnitt (15a) radial nach außen vorsteht.

13. Radlagervorrichtung nach Anspruch 1 oder 2, wobei die zweite Kappe (40, 47, 49, 52) aus Stahlblech gebildet und in einem Überlappungszustand mit der ersten Kappe (39, 46, 48) über ein vorbestimmtes Übermaß in den Innenumfang des innenseitigen Endes des äußeren Elements (2) pressgepasst ist.

14. Radlagervorrichtung nach Anspruch 13, wobei ein Stufenabschnitt (40aa) an einem Öffnungsende des Passabschnitts (40a) der zweiten Kappe (40) ausgebildet ist, und der Stufenabschnitt (40aa) und der Passabschnitt (39a) der ersten Kappe (39) vorbestimmte Breitenabmessungen aufweisen, und wobei ein Öffnungsende (39aa) des Passabschnitts (39a) der ersten Kappe (39) in die zweite Kappe (40) pressgepasst wird, bis das Öffnungsende (39aa) des Passabschnitts (39a) der ersten Kappe (39) an einer Wand des Stufenabschnitts (40aa) anliegt.

15. Radlagervorrichtung nach Anspruch 13, wobei der Passabschnitt (46a) der ersten Kappe (46) und der Passabschnitt (47a) der zweiten Kappe (47) vorbestimmte Breitenabmessungen aufweisen, und wobei der Passabschnitt (46a) der ersten Kappe (46) in den Passabschnitt (47a) der zweiten Kappe (47) pressgepasst wird, bis die Endfläche des Passabschnitts (46a) der ersten Kappe (46) am unteren Abschnitt (40c) der zweiten Kappe (47) anliegt.

16. Radlagervorrichtung nach Anspruch 13, wobei der Passabschnitt (48a) der ersten Kappe (48) und der Passabschnitt (49a) der zweiten Kappe (49) vorbestimmte Breitenabmessungen aufweisen, und wobei der Passabschnitt (49a) der zweiten Kappe (49) in den Passabschnitt (48a) der ersten Kappe (48) pressgepasst wird, bis die Endfläche des Passabschnitts (49a) der zweiten Kappe (49) am Scheibenabschnitt (39b) der ersten Kappe (48) anliegt.

17. Radlagervorrichtung nach Anspruch 13, wobei die zweite Kappe (52) einen Flanschabschnitt (40b) aufweist, der als ein doppelt gebogener Abschnitt ausgebildet ist, der sich vom Passabschnitt (52a) radial nach außen erstreckt und ausgelegt ist, um mit der innenseitigen Endfläche (2d) des äußeren Elements (2) in engen Kontakt gebracht zu werden, wobei der Passabschnitt (48a) der ersten Kappe (48) und der Passabschnitt (52a) der zweiten Kappe (52) vorbestimmte Breitenabmessungen aufweisen, und wobei der Passabschnitt (48a) der ersten Kappe (48) auf den Passabschnitt (52a) der zweiten Kappe (52) pressgepasst wird, bis das Öffnungsende des Passabschnitts (48a) der ersten Kappe (48) an der Seitenfläche des Flanschabschnitts (40b) anliegt, und die zweite Kappe (52) in das äußere Element (2) pressgepasst wird, bis die Seitenfläche des Flanschabschnitts (40b) an der Endfläche (2d) des äußeren Elements (2) anliegt.

18. Radlagervorrichtung nach Anspruch 13, wobei das elastische Element (41) aus Kunstkautschuk durch Vulkanisierungskleben einstückig an den Verbindungsabschnitt zwischen dem Passabschnitt (39a, 46a) der ersten Kappe (39, 46) und dem Passabschnitt (40a, 47a) der zweiten Kappe (40, 47) geklebt ist, und wobei das elastische Element (41) elastisch verformt und mit der Passfläche (20) des äußeren Elements (2) in Presskontakt gebracht ist, und das elastische Element (41) mit dem Passabschnitt (39a, 46a) der ersten Kappe (39, 46) in engen Kontakt gebracht ist.

## Revendications

1. Appareil de support de roue comprenant :
un élément extérieur (2) formé intégralement sur sa circonférence intérieure avec des surfaces de chemin de roulement extérieures à double rangée (2a, 2a) ;
un élément intérieur (1) comprenant une roue de moyeu (4) et au moins un anneau intérieur (5), la roue de moyeu (4) étant formée intégralement sur son extrémité avec une bride de montage de roue (6) et ayant une partie cylindrique (4b) s'étendant axialement à partir de la bride de montage de roue (6), l'anneau intérieur (5) étant monté par pression sur la partie cylindrique (4b) de la roue de moyeu (4), l'élément intérieur (1) étant formé sur sa circonférence extérieure avec des surfaces de chemin de roulement intérieures à double rangée (4a, 5a) en face des surfaces de chemin de roulement extérieures à double rangée (2a, 2a) ;
des éléments roulants à double rangée (3, 3) contenus entre les surfaces de chemin de roulement intérieures (4a, 5a) et surfaces de chemin de roulement extérieures (2a, 2a) de l'élément intérieur (1) et de l'élément extérieur (2) ;
un anneau d'impulsion (12) adapté pour être monté sur la circonférence extérieure de l'anneau intérieur (5) et ayant des caractéristiques variant de manière alternée et équidistante le long de sa direction circonférentielle ;
un second capuchon en forme de godet (16, 16', 29, 40, 47, 49, 52) formé à la presse en tôle d'acier et monté sur l'extrémité côté intérieur de l'élément extérieur (2) ; un capteur de vitesse de rotation (21) monté sur le second capuchon (16, 16', 29, 40, 47, 49, 52) en correspondance d'une position radialement extérieure de celui-ci, le capteur de vitesse de rotation (21) étant disposé à l'opposé de l'anneau d'impulsion (12) par l'intermédiaire d'un entrefer axial prédéterminé ; un premier capuchon en forme de godet (15, 39, 46, 48) étant monté à la presse dans la circonférence intérieure d'une extrémité côté intérieur de l'élément extérieur (2) par l'intermédiaire d'une interférence prédéterminée, étant formé à la presse en tôle d'acier inoxydable austénitique non magnétique et comprenant une partie de montage cylindrique (15a, 39a, 46a, 48a) montée à la presse dans la circonférence intérieure de l'extrémité côté intérieur de l'élément extérieur (2), une partie de disque (15c, 39b) s'étendant radialement vers l'intérieur à partir de la partie de montage (15a, 39a, 46a, 48a) et s'opposant à l'anneau d'impulsion (12) par l'intermédiaire d'un petit espace axial ;
le capteur de vitesse de rotation (21) étant disposé à l'opposé de l'anneau d'impulsion (12) par l'intermédiaire du premier capuchon (15, 39, 46, 48) et étant en butée contre ou fermé à la partie de disque (15c, 39b) du premier capuchon (15, 39, 46, 48) ; et le second capuchon (16, 16', 29, 40, 47, 49, 52) étant monté à la presse dans la circonférence intérieure d'une extrémité côté intérieur de l'élément extérieur (2) par l'intermédiaire d'une interférence prédéterminée ;
**caractérisé en ce que** :
une partie bombée (27) est formée sur une partie inférieure (16c, 40c) du second capuchon (16, 16', 29, 40, 47, 49, 52) en correspondance d'une région plus proche du sol et **en ce qu'**un drain (26, 30) qui est coupé radialement est formé dans une paroi inférieure de la partie bombée (27).

2. Appareil de support de roue de la revendication 1, dans lequel une première surface de montage (19) est formée sur la circonférence intérieure de l'extrémité côté intérieur de l'élément extérieur (2) et une seconde surface de montage (20) est formée sur la circonférence intérieure de l'élément extérieur (2) en correspondance d'un ultérieur côté intérieur à partir de la première surface de montage (19) par l'intermédiaire d'une partie étagée (19a), et dans lequel le premier capuchon (15, 39, 46, 48) est monté à la presse sur la première surface de montage (19) et le second capuchon (16, 16', 29, 40, 47, 49, 52) est monté à la presse sur la seconde surface de montage (20).

3. Appareil de support de roue de la revendication 2, dans lequel la première surface de montage (19) et la seconde surface de montage (20) sont rectifiées par une meule formée simultanément avec les surfaces de chemin de roulement extérieures à double rangée (2a, 2a).

4. Appareil de support de roue de la revendication 1 ou 2, dans lequel le second capuchon (16, 16', 29, 40, 47, 49, 52) comprend une partie de montage cylindrique (16a, 16a', 40a, 47a, 49a, 52a) montée sur la circonférence intérieure de l'extrémité côté intérieur de l'élément extérieur (2), une partie de bride (16b, 16b', 40b) formée comme une double partie courbée s'étendant radialement vers l'extérieur à partir de la partie de montage (16a, 16a', 40a, 47a, 49a, 52a) adaptée pour être mise en contact étroit avec la face d'extrémité côté intérieur (2d) de l'élément extérieur (2), et la partie inférieure (16c, 40c) s'étendant radialement vers l'intérieur à partir de la partie de bride (16b, 16b', 40b) pour fermer une ouverture côté intérieur de l'élément extérieur (2), et dans lequel une ouverture d'insertion (17) est formée dans la partie inférieure (16c, 40c) en correspondance d'une position correspondant à l'anneau d'impulsion (12) dans lequel le capteur de vitesse de rotation (21) est inséré et monté dans celui-ci.

5. Appareil de support de roue de la revendication 2 ou 3, dans lequel une profondeur de la seconde surface de montage (20) est supérieure à l'épaisseur (t2) du second capuchon (16, 16', 29, 40, 47).

6. Appareil de support de roue d'une quelconque des revendications 1∼3, dans lequel la circonférence intérieure (28) entre la première surface de montage (19) et la seconde surface de montage (20) de l'élément extérieur (2) est formée comme une surface conique dont le rayon augmente progressivement selon un angle (α) vers l'ouverture de l'élément extérieur (2).

7. Appareil de support de roue d'une quelconque des revendications 1, 2, 4 ou 5, dans lequel le second capuchon (16, 16', 29, 40, 47, 49, 52) est revêtu d'un film de revêtement antirouille (36) comprenant une électrodéposition de cations.

8. Appareil de support de roue d'une quelconque des revendications 1, 2, 4 ou 5, dans lequel le second capuchon (16, 16', 29, 40, 47, 49, 52) est formé d'une tôle d'acier protégé contre la rouille et un élément élastique (37, 38, 41, 53, 54) est collé intégralement sur le second capuchon (16, 16', 29, 40, 47, 49, 52) en correspondance d'une partie mise en contact avec l'élément extérieur (2).

9. Appareil de support de roue de la revendication 8, dans lequel l'élément élastique du second capuchon (16) est formé d'un film de revêtement antirouille (36) comprenant une électrodéposition de cations.

10. Appareil de support de roue de la revendication 8, dans lequel l'élément élastique du second capuchon (16') est un élément de garnissage (37, 38) formé de caoutchouc synthétique collé intégralement au second capuchon (16') par adhérence vulcanisée.

11. Appareil de support de roue de la revendication 1, dans lequel le drain (30) est formé sous la forme d'une languette par poinçonnage et pliage de la paroi inférieure de la partie bombée (27).

12. Appareil de support de roue de la revendication 1, dans lequel une partie radialement réduite (15b) est formée entre la partie de montage (15a) et la partie de disque (15c) du premier capuchon (15) et un élément élastique (18) en caoutchouc synthétique est collé intégralement à la partie radialement réduite (15b) par adhérence vulcanisée, et dans lequel l'élément élastique (18) est disposé de telle sorte qu'il ne fait pas saillie de la surface latérale de la partie de disque (15c) vers le côté intérieur pour empêcher l'élément élastique (18) d'interférer avec le capteur de vitesse de rotation (21) et l'élément élastique (18) est formé avec une saillie annulaire (18a) faisant saillie radialement vers l'extérieur à partir de la partie de montage (15a).

13. Appareil de support de roue de la revendication 1 ou 2, dans lequel le second capuchon (40, 47, 49, 52) est formé d'une tôle d'acier et monté à la presse par une interférence prédéterminée dans la circonférence intérieure de l'extrémité côté intérieur de l'élément extérieur (2) dans un état de chevauchement avec le premier capuchon (39, 46, 48).

14. Appareil de support de roue de la revendication 13, dans lequel une partie étagée (40aa) est formée sur une extrémité d'ouverture de la partie de montage (40a) du second capuchon (40) et la partie étagée (40aa) et la partie de montage (39a) du premier capuchon (39) ont des dimensions en largeur prédéterminées, et dans lequel une extrémité d'ouverture (39aa) de la partie de montage (39a) du premier capuchon (39) est montée à la presse dans le second capuchon (40) jusqu'à ce que l'extrémité d'ouverture (39aa) de la partie de montage (39a) du premier capuchon (39a) soit en butée contre une paroi de la partie étagée (40aa).

15. Appareil de support de roue de la revendication 13, dans lequel la partie de montage (46a) du premier capuchon (46) et la partie de montage (47a) du second capuchon (47) ont des dimensions en largeur prédéterminées, et dans lequel la partie de montage (46a) du premier capuchon (46) est montée à la presse dans la partie de montage (47a) du second capuchon (47) jusqu'à ce que la face d'extrémité de la partie de montage (46a) du premier capuchon (46) soit en butée contre la partie inférieure (40c) du second capuchon (47).

16. Appareil de support de roue de la revendication 13, dans lequel la partie de montage (48a) du premier capuchon (48) et la partie de montage (49a) du second capuchon (49) ont des dimensions en largeur prédéterminées, et dans lequel la partie de montage (49a) du second capuchon (49) est montée à la presse dans la partie de montage (48a) du premier capuchon (48) jusqu'à ce que la face d'extrémité de la partie de montage (49a) du second capuchon (49) soit en butée contre la partie inférieure (39b) du premier capuchon (48).

17. Appareil de support de roue de la revendication 13, dans lequel le second capuchon (52) comporte une partie de bride (40b) formée sous la forme d'une partie pliée double s'étendant radialement vers l'extérieur à partir de la partie de montage (52a) adaptée pour être mise en contact étroit contre la face d'extrémité côté intérieur (2d) de l'élément extérieur (2), dans lequel la partie de montage (48a) du premier capuchon (48) et la partie de montage (52a) du second capuchon (52) ont des dimensions en largeur prédéterminées, et dans lequel la partie de montage (48a) du premier capuchon (48) est montée à la presse sur la partie de montage (52a) du second capuchon (52) jusqu'à ce que l'extrémité d'ouverture de la partie de montage (48a) du premier capuchon (48) soit en butée contre la surface latérale de la partie (40b) de bride, et le second capuchon (52) est monté à la presse dans l'élément extérieur (2) jusqu'à ce que la surface latérale de la partie de bride (40b) soit en butée contre la face d'extrémité (2d) de l'élément extérieur (2) .

18. Appareil de support de roue de la revendication 13, dans lequel l'élément élastique (41) en caoutchouc synthétique est collé intégralement par adhérence vulcanisée à la partie reliée entre la partie de montage (39a, 46a) du premier capuchon (39, 46) et la partie de montage (40a, 47a) du second capuchon (40, 47), et dans lequel l'élément élastique (41) est déformé élastiquement et mis en contact à la presse avec la surface de montage (20) de l'élément extérieur (2) et l'élément élastique (41) est mis en contact étroit avec la partie de montage (39a, 46a) du premier capuchon (39, 46).
